(19) Europäisches Patentamt
European Patent Office
Office européen des brevets

(11) **EP 2 617 788 B1**

(12) **EUROPÄISCHE PATENTSCHRIFT**

(45) Veröffentlichungstag und Bekanntmachung des Hinweises auf die Patenterteilung:
**03.09.2014 Patentblatt 2014/36**

(51) Int Cl.:
*C09J 133/00* (2006.01)        *C08K 5/1515* (2006.01)
*C08K 5/17* (2006.01)          *C08K 5/37* (2006.01)
*C08K 5/50* (2006.01)

(21) Anmeldenummer: **13150154.6**

(22) Anmeldetag: **03.01.2013**

(54) **Vernetzer-Beschleuniger-System für Polyacrylate**

Crosslinking accelerator system for polyacrylates

Système d'accélérateur de mise en réseau pour polyacrylate

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2012 DE 102012200853**

(43) Veröffentlichungstag der Anmeldung:
**24.07.2013 Patentblatt 2013/30**

(73) Patentinhaber: **tesa SE**
**20253 Hamburg (DE)**

(72) Erfinder:
• **Prenzel, Dr. Alexander**
**20259 Hamburg (DE)**
• **Bamberg, Sarah**
**22529 Hamburg (DE)**
• **Papenbroock, Marten**
**20253 Hamburg (DE)**
• **Beschmann, Jennifer**
**20259 Hamburg (DE)**

(56) Entgegenhaltungen:
**EP-A1- 1 978 069**

## Beschreibung

Die vorliegende Erfindung betrifft das technische Gebiet der vernetzbaren Polyacrylate. Insbesondere wird ein System zur Steuerung der Vernetzungsgeschwindigkeit thermisch vernetzbarer Polyacrylate vorgeschlagen, das auf der Kombination einer Epoxidgruppenhaltigen Substanz mit einem speziell substituierten Amin beruht.

Polyacrylate werden vielfach für hochwertige industrielle Anwendungen als Klebe-, insbesondere als Haftklebe- oder Heißsiegelmassen eingesetzt, da sie sich für die wachsenden Anforderungen in diesen Anwendungsbereichen als gut geeignet herausgestellt haben. So müssen Haftklebemassen eine gute Anfassklebrigkeit ("Tack") aufweisen, aber auch hohen Anforderungen hinsichtlich der Scherfestigkeit gerecht werden. Gleichzeitig muss eine Eignung zur Beschichtung dieser Massen auf Trägermaterialien gegeben sein. All dies kann durch die Verwendung von Polyacrylaten mit hohem Molekulargewicht und hoher Polarität und deren effiziente Vernetzung erreicht werden. Zudem lassen sich Polyacrylate transparent und witterungsstabil herstellen.

Bei der Beschichtung von als Haftkleber verwendbaren Polyacrylatmassen aus Lösung oder als Dispersion ist die thermische Vernetzung seit langem Stand der Technik. In der Regel setzt man den thermischen Vernetzer - zum Beispiel ein multifunktionelles Isocyanat, ein Metall-Chelat oder ein multifunktionelles Epoxid - zur Lösung beziehungsweise Dispersion eines mit entsprechenden funktionellen Gruppen ausgestatteten Polyacrylats zu, beschichtet flächig auf ein Substrat und trocknet anschließend. Dadurch werden organische Lösemittel oder - bei Dispersionen - Wasser verdampft und das Polyacrylat entsprechend vernetzt. Die Vernetzung ist sehr wichtig für die Beschichtungen, denn dadurch erhalten sie eine ausreichende Kohäsion und Wärmescherfestigkeit. Ohne Vernetzung wären die Beschichtungen zu weich und würden schon bei geringer Belastung zerfließen. Wesentlich für ein gutes Beschichtungsergebnis ist die Beachtung der Topfzeit (Verarbeitungszeit, in der das System im verarbeitungsfähigen Zustand vorliegt), die je nach Vernetzungssystem deutlich unterschiedlich sein kann. Ist diese Zeit zu kurz, dann hat der Vernetzer schon in der Polyacrylatlösung reagiert, die Lösung ist schon teilweise vernetzt und lässt sich nicht mehr gleichmäßig auftragen.

Der technologische Prozess zur Herstellung von Haftklebemassen entwickelt sich ständig weiter. Motiviert durch restriktivere Umweltauflagen und steigende Preise für Lösungsmittel, ist man bestrebt, die Lösungsmittel so weit wie möglich aus dem Fertigungsprozess zu eliminieren. In der Industrie sind daher Schmelzverfahren (auch als Heißschmelzverfahren oder Hotmeltverfahren bezeichnet) mit lösungsmittelfreier Beschichtungstechnik zur Herstellung von Haftklebemassen von stetig wachsender Bedeutung. Hierbei werden schmelzfähige Polymermassen, also Polymermassen, die bei erhöhten Temperaturen in den fließfähigen Zustand übergehen, ohne sich zu zersetzen, verarbeitet. Solche Massen lassen sich hervorragend aus dem Schmelzezustand heraus verarbeiten. In Weiterentwicklungen dieses Prozesses wird angestrebt, auch die Herstellung der Polymermassen lösungsmittelarm oder lösungsmittelfrei durchzuführen.

Die Einführung der Hotmelt-Technologie stellt wachsende Anforderungen an die Klebemassen. Insbesondere schmelzfähige Polyacrylatmassen (synonyme Bezeichnungen: "Polyacrylathotmelts", "Acrylathotmelts") werden sehr intensiv auf Verbesserungen hin untersucht. Bei der Beschichtung von Polyacrylatmassen aus der Schmelze ist die thermische Vernetzung bislang nicht sehr verbreitet, obwohl dieses Verfahren Vorteile hätte.

Bislang werden Acrylathotmelts vor allem durch strahlenchemische Verfahren (UV-Bestrahlung, ESH-Bestrahlung) vernetzt. Diese Verfahrensweise ist aber mit diversen Nachteilen verbunden:

- Im Falle der Vernetzung mittels UV-Strahlen sind nur UV-transparente (UVdurchlässige) Schichten vernetzbar.
- Im Falle der Vernetzung mit Elektronenstrahlen (Elektronenstrahlvernetzung beziehungsweise Elektronenstrahlenhärtung, auch ESH) besitzen die Elektronenstrahlen nur eine begrenzte Eindringtiefe, die abhängig von Dichte des bestrahlten Materials und von der Beschleunigerspannung ist.
- In beiden vorgenannten Verfahren weisen die Schichten nach der Vernetzung ein Vernetzungsprofil auf, und die Haftklebeschicht vernetzt nicht homogen.

Die Haftklebeschicht muss relativ dünn sein, damit durch strahlenchemische Verfahren gut vernetzte Schichten erhalten werden können. In Abhängigkeit von Dichte, Bescheunigerspannung (ESH) und/oder aktiver Wellenlänge (UV) variiert die durchstrahlbare Dicke zwar, ist aber immer stark limitiert, so dass sich nicht beliebig dicke Schichten - und schon gar nicht homogen - vernetzen lassen.

Im Stand der Technik sind auch einige Verfahren zur thermischen Vernetzung von Acrylathotmelts bekannt. Hierbei wird jeweils zur Acrylatschmelze vor der Beschichtung ein Vernetzer zugesetzt, dann wird ausgeformt und zur Rolle gewickelt.

Eine direkte thermische Vernetzung von Acrylat-Hotmeltmassen, die NCO-reaktive Gruppen enthalten, wird in EP 0 752 435 A1 beschrieben. Die verwendeten blockierungsmittelfrelen Isocyanate, insbesondere sterisch gehinderte und dimerisierte Isocyanate, benötigen sehr drastische Vernetzungsbedingungen, so dass eine sinnvolle technische Umsetzung Probleme bietet. Die in der EP 0 752 435 A1 beschriebene Vorgehensweise führt bei den Bedingungen, wie sie bei einer Verarbeitung aus der Schmelze herrschen, zu einer raschen, relativ weitgehenden Vernetzung, so dass eine Beschichtung der Masse auf Trägermaterialien schwierig ist. Insbesondere können keine homogenen Klebstoffschichten erhalten werden, wie sie für viele technische Anwendungen von Klebebändern erforderlich sind.

Weiterhin ist die Verwendung von blockierten Isocyanaten Stand der Technik. Nachteilig an diesem Konzept ist die Freisetzung von Blockierungsgruppen beziehungsweise Fragmenten, die einen negativen Effekt auf die klebtechnischen Eigenschaften haben können. Ein Beispiel ist US 4,524,104 A. Hier werden Acrylatschmelzhaftkleber beschrieben, die mit blockierten Polyisocyanaten zusammen mit Cycloamidinen oder Salzen davon als Katalysator vernetzt werden können. Bei diesem System können der notwendige Katalysator, vor allem aber entstehende Substanzen wie HCN, Phenol, Caprolactam oder dergleichen die Produkteigenschaften stark beeinträchtigen. Zudem sind auch bei diesem Konzept häufig drastische Bedingungen zur Freisetzung der reaktiven Gruppen vonnöten. Eine nennenswerte Anwendung dieses Konzepts ist bislang nicht bekannt und erscheint zudem unattraktiv.

Die DE 10 2004 044 086 A1 beschreibt ein Verfahren zur thermischen Vernetzung von Acrylathotmelts, bei dem ein lösemittelfreies funktionalisiertes Acrylatcopolymer, welches nach Zudosierung eines thermisch reaktiven Vernetzers eine für das Compoundieren, Fördern und Beschichten ausreichend lange Verarbeitungszeit hat, auf eine bahnförmige Schicht eines weiteren Materials beschichtet wird und anschließend unter milden Bedingungen nachvernetzt, bis eine für Haftklebebänder ausreichende Kohäsion erreicht wird. Nachteilig an diesem Verfahren ist, dass durch die Reaktivität des Vernetzers (Isocyanat) die freie Verarbeitungszeit und der Vernetzungsgrad vorbestimmt wird. Isocyanat-Vernetzer reagieren zum Teil schon bei Zugabe, wodurch je nach System die gelfreie Zeit sehr kurz sein kann. Eine Masse mit einem höheren Anteil an funktionellen Gruppen wie Hydroxygruppen oder Carbonsäure lässt sich dann nicht mehr ausreichend gut auftragen. Ein mit Gelstippen durchsetztes, also inhomogenes Strichbild wäre die Folge. Weiterhin ergibt sich das Problem, dass der erzielbare Vernetzungsgrad begrenzt ist. Wenn durch Zusatz einer höheren Vernetzermenge ein höherer Vernetzungsgrad gewünscht ist, hat dies bei Verwendung multifunktioneller Isocyanate Nachteile. Die Masse würde zu schnell reagieren und wäre - wenn überhaupt - nur mit sehr geringer Verarbeitungszeit und somit sehr hoher Beschichtungsgeschwindigkeit beschichtbar, was die Problematik des nicht homogenen Beschichtungsbildes vertiefen würde.

Die Vernetzung mittels multifunktioneller Epoxide wird in der EP 1 978 069 A1 beschrieben, wobei gezeigt werden konnte, dass durch den Einsatz von Beschleunigern, ohne die die Epoxide so gut wie nicht mit den im Polymer enthaltenen Carboxylgruppen reagieren würde, der Vernetzungsgrad unabhängig von der Vernetzungskinetik eingestellt werden kann. Um eine Beschichtbarkeit der Masse nach der Schmelzeverarbeitung gewährleisten zu können, darf die Vernetzung im Extruder nur zu einem geringen Anteil stattfinden und muss anschließend noch bei niedrigeren Temperaturen als im Extruder weitergehen, damit optimale Produkteigenschaften erzielt werden. Die in der EP 1 978 069 A1 beschrieben Vernetzer-Beschleuniger-Systeme erfüllen zwar diese Anforderung und sind industriell einsetzbar, jedoch war die Nachvernetzung bei Raumtemperatur zu langsam. Eine Nachvernetzung bei erhöhten Temperaturen ist häufig nicht gewünscht, wenn die Haftklebemassen schon zu Rollen gewickelt sind, die durch die Temperschritte ihre Form verlieren können.

Epoxide reagieren grundsätzlich nur unter Wärmeeinfluss, und zwar insbesondere erst nach längerer Zufuhr thermischer Energie. Bekannte Beschleunigersubstanzen wie zum Beispiel $ZnCl_2$ führen zwar zur Verbesserung der Reaktionsfähigkeit im Temperaturbereich von Polymerschmelzen, aber bei fehlender Zufuhr thermischer Energie von außen (also beispielsweise bei Raumtemperatur) geht die Reaktivität der Epoxide auch in Gegenwart der Beschleuniger verloren, so dass die Vernetzungsreaktion abbricht (die Beschleuniger wirken also bei der gegebenen Temperatur nicht mehr beschleunigend). Dies ist insbesondere dann ein Problem, wenn die als Hotmelt verarbeiteten Polyacrylate innerhalb relativ kurzer Zeiträume (einige Minuten) beschichtet werden und dann mangels weiterer Wärmezufuhr rasch bis zur Raumtemperatur beziehungsweise Lagerungstemperatur abkühlen. Ohne die Initiierung einer weiteren Vernetzungsreaktion könnten keine hohen Vernetzungsgrade erzielt werden, was sich für viele Anwendungsbereiche von Polyacrylaten, wie insbesondere die Verwendung als Haftklebemasse, sehr nachteilig in einer zu geringen Kohäsion der Masse auswirken würde.

Würde das Vernetzersystem mit nur in der Wärme funktionierenden Beschleunigern, beispielweise $ZnCl_2$, zu früh in das Polyacrylat-System gegeben werden (um einen hinreichenden Vernetzungsgrad zu erzielen), so könnten die Massen nicht mehr homogen verarbeitet, insbesondere compoundiert und beschichtet werden, da sie zu schnell vernetzen oder gar "vergelen" (unkontrolliert vernetzen) würden. Bewirkt der Beschleuniger hingegen eine zu geringe Aktivierung der Epoxidvernetzung, so muss mit einer sehr langen Nachvernetzungszeit gerechnet beziehungsweise müssen die Massen bei hohen Temperaturen gelagert werden, was nicht erwünscht ist.

Aufgabe der vorliegenden Erfindung ist es, eine thermische Vernetzung von aus der Schmelze verarbeitbaren Polyacrylatmassen ("Polyacrylat-Hotmelts") zu ermöglichen, wobei für die Verarbeitung aus der Schmelze eine hinreichend lange Verarbeitungszeit ("Topfzeit") zur Verfügung stehen soll, insbesondere verglichen mit der Topfzeit bei den bekannten thermischen Vernetzungssystemen für Polyacrylat-Hotmelts. Dabei soll auf den Einsatz von Schutzgruppen, die gegebenenfalls durch aktinische Strahlung oder andere Methoden wieder entfernt werden müssten, verzichtet werden können. Weiterhin soll der Vernetzungsgrad der Polyacrylatmasse auf ein gewünschtes Level einzustellen sein, ohne dass die Vorteile der Prozessführung negativ beeinflusst würden. Die Nachvernetzung soll auch bei niedrigen Temperaturen schnell zu einem Endniveau fortlaufen.

Im Folgenden werden die Polyacrylatmassen auch in synonymer Weise kurz als "Polyacrylate" bezeichnet. Für die nicht vernetzten Polyacrylatmassen wird auch der Begriff "Polymerisate" verwendet, für die fertig oder teilweise vernetzten Polyacrylatmassen der Begriff "Polymere".

Die vorstehende Aufgabe wird durch ein spezielles Vernetzer-Beschleuniger System aus mindestens einer Epoxid-Verbindung und mindestens einem spezifisch substituierten Amin gelöst. Ein erster Gegenstand der Erfindung ist daher ein Vernetzer-Beschleuniger-System für die thermische Vernetzung von Polyacrylaten mit funktionellen Gruppen, die geeignet sind, mit Epoxidgruppen Verknüpfungsreaktionen einzugehen, das zumindest eine Substanz umfasst, die mindestens eine Epoxidgruppe enthält (Vernetzer), sowie mindestens eine Substanz entsprechend der allgemeinen Formel (I)

$$R^1_2N-CR^2R^3-CR^4R^5-(CR^6R^7)_n-X \qquad (I)$$

worin die Reste $R^1$ unabhängig voneinander für ein Wasserstoffatom oder einen substituierten oder unsubstituierten Alkyl- oder Cycloalkylrest mit 1 bis 8 Kohlenstoffatomen stehen oder mit dem Stickstoffatom einen 5-7gliedrigen Ring bilden, der mindestens 4 Kohlenstoffatome und maximal ein weiteres Heteroatom als Ringatome enthält; die Reste $R^2$, $R^3$, $R^4$, $R^5$, $R^6$ und $R^7$ unabhängig voneinander für ein Wasserstoffatom oder einen Alkylrest mit 1 bis 8 Kohlenstoffatomen stehen oder eine 5-7gliedrige Cycloalkylengruppe bilden; n für eine ganze Zahl von 0 bis 4 steht; und X für eine Gruppe ausgewählt aus -OH, -OR, -SH, -SR und -PR$_2$ steht, worin die Reste R unabhängig voneinander für einen jeweils linearen oder verzweigten, unsubstituierten oder substituierten $C_1$-$C_{18}$-Alkylrest, $C_2$-$C_{18}$-Alkenylrest, $C_2$-$C_{18}$-Alkinylrest; eine unsubstituierte oder substituierte Arylgruppe oder einen aliphatischen oder aromatischen Heterocyclus stehen (Beschleuniger).

Ein derartiges Vernetzer-Beschleuniger-System ermöglicht zunächst komfortable Verarbeitungszeiten für die Polyacrylatmassen, während später auch bei niedrigen Temperaturen, insbesondere bei Raumtemperatur, eine zügige Nachvernetzung gewährleistet ist. Das erfindungsgemäße Vernetzer-Beschleuniger-System vermeidet die oben aufgeführten Nachteile herkömmlicher Vernetzungssysteme und ist optimal an die Erfordernisse eines industriell durchgeführten Prozesses zur Herstellung von Haftklebemassen beziehungsweise von mit Haftklebemassen beschichteten Produkten angepasst.

Durch die erfindungsgemäße Kombination der genannten Komponenten kann ein thermisches Vernetzungsverfahren angeboten werden, dass bei der Verarbeitung von Polyacrylat-Heißschmelzmassen nicht zu unkontrollierten Reaktionen (Vergelung der Masse) führt und für die Verarbeitung eine hinreichend lange Zeit (Topfzeit) belässt, so dass insbesondere beim Ausstreichen als Schicht oder bei Auftrag auf einen Träger ein gleichmäßiges und blasenfreies Strichbild erzielt werden kann. Das erfindungsgemäße Vernetzer-Beschleuniger-System bewirkt sehr vorteilhaft, dass die notwendige Nachvernetzung der Polyacrylatmasse nach der Verarbeitung, insbesondere nach dem Ausstreichen als Schicht oder dem Auftrag auf einen Träger, bei im Vergleich zur Schmelzeherstellung deutlich verringerter Zufuhr von thermischer Energie, also nach Abkühlung, schnell abläuft, ohne dass hierzu aktinische Bestrahlung notwendig wäre. Mit einer schnellen Vernetzung ist gemeint, dass der elastische Anteil der Masse, gemessen mittels Mikroscherwegmethode H3, innerhalb einer Woche deutlich mehr als 25 %, besonders bevorzugt mehr als 35 % beträgt.

Die Polyacrylate sind durch das erfindungsgemäße Vernetzer-Beschleuniger-System in der Lage, ohne weitere aktiv, also verfahrenstechnisch, zugeführte thermische Energie (Beheizung), insbesondere nach Abkühlung auf Raumtemperatur (RT, 20 °C) oder auf eine Temperatur nahe Raumtemperatur, weiter zu vernetzen. Insbesondere kann in dieser Phase der Vernetzung auf Beheizung verzichtet werden, ohne dass dies zu einem Abbruch der Vernetzungsreaktion führen würde.

Unter einem "Vernetzer" wird erfindungsgemäß eine Substanz verstanden, über die sich die Verknüpfung der Polyacrylat-Moleküle zu dreidimensionalen Gebilden durch Ausbildung kovalenter Bindungen vollzieht. Unter einem "Beschleuniger" wird eine Substanz verstanden, welche die die Vernetzungsreaktion insofern unterstützt, als sie für eine im Vergleich zur Abwesenheit des Beschleunigers signifikant erhöhte Geschwindigkeit der Vernetzungsreaktion sorgt. Dies gilt selbstverständlich bei vergleichbaren Reaktionsparametern und insbesondere bei Temperaturen unterhalb der Schmelztemperatur der Polyacrylate. In diesem Temperaturbereich würde die Vernetzungsreaktion ohne Beschleuniger gar nicht oder nur sehr langsam ablaufen. Der Beschleuniger bewirkt also eine wesentliche Verbesserung der Reaktionskinetik der Vernetzungsreaktion. Dies kann erfindungsgemäß auf katalytische Weise, aber auch durch Einbindung in das Reaktionsgeschehen erfolgen.

Unter "Polyacrylaten" werden Polymere verstanden, deren stoffmengenbezogene Monomerbasis zu mindestens 30% aus Acrylsäure, Methacrylsäure, Acrylsäureestern und/oder Methacrylsäureestern besteht, wobei Acrylsäureester und/oder Methacrylsäureester zumindest anteilig generell und bevorzugt zu mindestens 30% enthalten sind. Insbesondere wird unter einem "Polyacrylat" ein Polymerisat verstanden, welches durch radikalische Polymerisation von Acryl- und/oder Methylacrylmonomeren sowie gegebenenfalls weiteren, copolymerisierbaren Monomeren erhältlich ist.

Das erfindungsgemäße Vernetzer-Beschleuniger-System enthält zumindest eine Substanz, die mindestens eine Epoxidgruppe enthält, als Vernetzer. Als epoxidgruppenhaltige Substanzen werden bevorzugt multifunktionelle Epoxide eingesetzt, also solche, die mindestens zwei Epoxidfunktionen pro Molekül aufweisen (also bezüglich der Epoxidgruppen mindestens difunktionell sind). Dies können sowohl aromatische als auch aliphatische Verbindungen sein.

Geeignete multifunktionelle Epoxide sind beispielsweise Oligomere des Epichlorhydrins, Epoxyether mehrwertiger Alkohole (insbesondere Ethylen-, Propylen- und Butylenglycole, Polyglycole, Thiodiglycole, Glycerin, Pentaerythrit, Sorbit, Polyvinylalkohol, Polyallylalkohol und ähnliche); Epoxyether mehrwertiger Phenole (insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)-diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon) sowie deren Hydroxyethylether; Phenol-Formaldehyd-Kondensationsprodukte wie Phenolalkohole, Phenolaldehydharze und ähnliche; S- und N-haltige Epoxide (zum Beispiel *N,N*-Diglycidylanillin, *N,N'*-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon beziehungsweise deren Derivaten und anderen) erhältlich sind.

Erfindungsgemäß sehr gut geeignete Epoxidgruppen-haltige Ether sind beispielsweise 1,4-Butandioldiglycidether, Polyglycerol-3-Glycidether, Cyclohexandimethanoldiglycidether, Glycerintriglycidether, Neopentylglykoldiglycidether, Pentaerythrittetraglycidether, 1,6-Hexandioldiglycidether), Polypropylenglykoldiglycidether, Trimethylolpropantriglycidether, Pentaerythrittetraglycidether, Bisphenol-A-diglycidether und Bisphenol-F-diglycidether.

Das erfindungsgemäße Vernetzer-Beschleuniger-System enthält darüber hinaus zumindest eine Substanz entsprechend der allgemeinen Formel (I)

$$R^1_2N\text{-}CR^2R^3\text{-}CR^4R^5\text{-}(CR^6R^7)_n\text{-}X \qquad (I)$$

worin die Reste $R^1$ unabhängig voneinander für ein Wasserstoffatom oder einen substituierten oder unsubstituierten Alkyl- oder Cycloalkylrest mit 1 bis 8 Kohlenstoffatomen stehen oder mit dem Stickstoffatom einen 5-7gliedrigen Ring bilden, der mindestens 4 Kohlenstoffatome und maximal ein weiteres Heteroatom als Ringatome enthält; die Reste $R^2$, $R^3$, $R^4$, $R^5$, $R^6$ und $R^7$ unabhängig voneinander für ein Wasserstoffatom oder einen Alkylrest mit 1 bis 8 Kohlenstoffatomen stehen oder eine 5-7gliedrige Cycloalkylengruppe bilden; n für eine ganze Zahl von 0 bis 4 steht; und X für eine Gruppe ausgewählt aus -OH, -OR, -SH, -SR und $-PR_2$ steht, worin die Reste R unabhängig voneinander für einen jeweils linearen oder verzweigten, unsubstituierten oder substituierten $C_1$-$C_{18}$-Alkylrest, $C_2$-$C_{18}$-Alkenylrest, $C_2$-$C_{18}$-Alkinylrest; eine unsubstituierte oder substituierte Arylgruppe oder einen aliphatischen oder aromatischen Heterocyclus stehen, als Beschleuniger.

Unter "substituiert" wird verstanden, dass ein Wasserstoffatom, das an ein zum jeweiligen Rest gehörendes Kohlenstoffatom gebunden ist, durch ein anderes Atom oder eine chemische Gruppe, beispielsweise eine funktionelle Gruppe, ersetzt ist, wobei das direkt an das betreffende Kohlenstoffatom des Restes gebundene Atom einer Gruppe insbesondere auch ein Heteroatom, also kein Kohlenstoffatom, sein kann. Unter den Begriff "substituierter Alkylrest" fallen Reste, die ihrem Wesen nach trotz Substitution noch als Alkylrest bezeichnet werden können. Dazu gehören beispielsweise in 1-Position, also am direkt an das Stickstoff-, Sauerstoff-, Schwefel- oder Phosphor-Atom gebundenen Kohlenstoffatom, halogenierte Reste. Nicht unter den Begriff "substituierter Alkylrest" fallen hingegen beispielsweise Reste, deren in 1-Position befindliches Kohlenstoffatom Bestandteil einer Carbonylgruppe oder einer vergleichbaren funktionellen Gruppe ist, die den betreffenden Rest seinem Wesen nach nicht mehr zu den Alkylresten gehören lässt.

Geeignete Substanzen entsprechend der allgemeinen Formel (I) sind beispielsweise 2,2-(Di-*tert*-butylphosphino)ethylamin, 2,2-(Diisopropylphosphino)ethylamin, 2,2-(Diphenylphosphino)ethylamin, N-(3-Dimethylaminopropyl)-*N,N*-diisopropanolamin, (1*R*,2*R*)-2-(Benzyloxy)cyclohexylamin und (1*S*,2*S*)-2-(Benzyloxy)cyclohexylamin, *N,N*-Dimethylethanolamin, Bis-(2-dimethylaminoethyl)ether, *N,N,N'*-Trimethyl-*N'*-hydroxyethylbisaminoethylether, 2-(2-Dimethylaminoethoxy)ethanol, *N,N,N'*-Trimethyl-aminoethylethanolamin, 2,2'-Dimorpholinodiethylether, *trans*-2-Aminocyclohexanol, cis-2-Aminocyclohexanol, Bis(2-hydroxycyclohexyl)methylamin, *N*-Cyclopentyl-2-methoxy-cyclohexylamin und (1*S*,2*S*)-2-(Diphenylphosphino)cyclohexylamin. Die Substanz entsprechend der allgemeinen Formel (I) ist bevorzugt ausgewählt aus den vorstehend aufgeführten Substanzen.

Bevorzugt steht X in der allgemeinen Formel (I) für eine Gruppe ausgewählt aus -OH, - OR und $-PR_2$. Mit

derartigen funktionellen Gruppen lässt sich in Kombination mit der substituierten Aminogruppe am anderen Ende des Moleküls ein besonders aktiver Beschleuniger erhalten. Besonders bevorzugt steht X für eine Gruppe ausgewählt aus - OH und -OR. Ein entsprechender Beschleuniger mit X = -OH, in dem darüber hinaus einer der Substituenten $R^2$ und $R^3$ sowie einer der Substituenten $R^4$ und $R^5$ gemeinsam eine Cyclohexylengruppe bilden, ist beispielsweise 2-Aminocyclohexanol.

Ganz besonders bevorzugt steht X für eine Gruppe ausgewählt aus -OH und -OR, und R steht für einen gegebenenfalls substituierten Alkylaminoalkylrest, beispielsweise für eine Dimethylaminoethylgruppe $Me_2N\text{-}(CH_2)_2\text{-}$ oder für eine N-Methyl-N-hydroxyethylaminoethylgruppe $(HO(CH_2)_2\text{-})MeN\text{-}(CH_2)_2\text{-}$.

Weiterhin wurde gefunden, dass der Abstand der Funktionalität X von der Aminfunktionalität einen deutlichen Effekt auf die Aktivität des Beschleunigers ausübt. Bevorzugt werden Beschleuniger verwendet, bei denen die Gruppe X über eine $C_2$-Brücke an die Aminfunktionalität gebunden ist. Bevorzugt ist daher n in der allgemeinen Formel (I) gleich 0 (Null).

Weiterhin wurde überraschend gefunden, dass Substanzen, die einen cyclischen Spacer mit einer $C_2$-Brücke zwischen der Aminofunktionalität und der Gruppe X aufweisen, eine besonders hohe Beschleunigeraktivität zeigen. Bevorzugte Beispiele für eine derartige Struktur sind das schon erwähnte 2-Aminocyclohexanol, 2-(Diphenylphosphino)cyclohexylamin, Bis(2-hydroxycyclohexyl)methylamin und N-Cyclopentyl-2-methoxycyclohexylamin. Ganz besonders bevorzugt zeigen derartige Substanzen eine trans-Konfiguration des Amins zur Gruppe X.

Bevorzugt steht mindestens einer der Reste $R^1$ für einen substituierten oder unsubstituierten Alkyl- oder Cycloalkylrest mit 1 bis 8 Kohlenstoffatomen. Besonders bevorzugt stehen beide Reste $R^1$ unabhängig voneinander für einen substituierten oder unsubstituierten Alkyl- oder Cycloalkylrest mit 1 bis 8 Kohlenstoffatomen. Ganz besonders bevorzugt stehen die beiden Reste $R^1$ jeweils für eine Methylgruppe.

Die zumindest eine Substanz entsprechend der allgemeinen Formel (I) ist erfindungsgemäß bevorzugt ausgewählt aus Bis-(2-dimethylaminoethyl)ether, *trans*-2-Aminocyclohexanol, *cis*-2-Aminocyclohexanol und *N,N,N'*-Trimethyl-*N'*-hydroxyethylbisaminoethylether. Diese Substanzen ermöglichen eine besonders effiziente Aktivierung der Verknüpfung über die Epoxidgruppen des Vernetzers.

Ein weiterer Gegenstand der vorliegenden Erfindung ist eine thermisch vernetzbare Zusammensetzung, die mindestens ein Polyacrylat mit funktionellen Gruppen, die geeignet sind, mit Epoxidgruppen Verknüpfungsreaktionen einzugehen, und ein erfindungsgemäßes Vernetzer-Beschleuniger-System enthält. Insbesondere betrifft dies eine thermisch vernetzbare Zusammensetzung, die mindestens ein Polyacrylat mit funktionellen Gruppen, die geeignet sind, mit Epoxidgruppen Verknüpfungsreaktionen einzugehen, und mindestens eine Substanz, die mindestens eine Epoxidgruppe enthält (Vernetzer), sowie mindestens eine Substanz entsprechend der allgemeinen Formel (I)

$$R^1{}_2N\text{-}CR^2R^3\text{-}CR^4R^5\text{-}(CR^6R^7)_n\text{-}X \qquad (I)$$

worin die Reste $R^1$ unabhängig voneinander für ein Wasserstoffatom oder einen substituierten oder unsubstituierten Alkyl- oder Cycloalkylrest mit 1 bis 8 Kohlenstoffatomen stehen oder mit dem Stickstoffatom einen 5-7gliedrigen Ring bilden, der mindestens 4 Kohlenstoffatome und maximal ein weiteres Heteroatom als Ringatome enthält; die Reste $R^2$, $R^3$, $R^4$, $R^5$, $R^6$ und $R^7$ unabhängig voneinander für ein Wasserstoffatom oder einen Alkylrest mit 1 bis 8 Kohlenstoffatomen stehen oder eine 5-7gliedrige substituierte oder unsubstituierte Cycloalkylengruppe bilden; n für eine ganze Zahl von 0 bis 4 steht; und X für eine Gruppe ausgewählt aus -OH, -OR, -SH, -SR und $-PR_2$ steht, worin die Reste R unabhängig voneinander für einen jeweils linearen oder verzweigten, unsubstituierten oder substituierten $C_1$-$C_{18}$-Alkylrest, $C_2$-$C_{18}$-Alkenylrest, $C_2$-$C_{18}$-Alkinylrest; eine unsubstituierte oder substituierte Arylgruppe oder einen aliphatischen oder aromatischen Heterocyclus stehen (Beschleuniger), umfasst.

Bevorzugt beträgt der Gesamtanteil an Substanzen, die mindestens eine Epoxidgruppe enthalten (Vernetzer), 0,1 - 5 Gew-%, besonders bevorzugt 0,15 - 0,4 Gew.-%, bezogen auf das reine (ohne Additive) zu vernetzende Polyacrylat. Der Gesamtanteil an Beschleuniger beträgt bevorzugt 0,05 - 5 Gew-%, besonders bevorzugt 0,1 - 1,2 Gew.-%, bezogen auf das additivfreie zu vernetzende Polyacrylat. "Reines zu vernetzendes Polyacrylat" bedeutet erfindungsgemäß "nur das zu vernetzende Polyacrylat ohne jedwede Additive". Besonders vorteilhaft ist es, wenn der Vernetzeranteil derart gewählt wird, dass ein elastischer Anteil der vernetzten Polyacrylate von mindestens 20 % resuliert. Bevorzugt beträgt der elastische Anteil mindestens 40 %, weiter bevorzugt mindestens 60 % (jeweils gemessen nach Messmethode H3; vgl. experimenteller Teil).

Vorzugsweise werden dementsprechend als Monomere oder Comonomere zur Herstellung des Polyacrylats anteilig funktionelle, mit Epoxidgruppen vernetzungsfähige Monomere eingesetzt. Bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; besonders bevorzugt sind carbonsäuregruppenhaltige Monomere. Es ist insbesondere vorteilhaft, wenn das Polyacrylat einpolymerisierte Acrylsäure und/oder Methacrylsäure aufweist.

Weitere Monomere, die als Comonomere für das Polyacrylat verwendet werden können, sind neben Acrylsäure- und/oder Methacrylsäureestern mit bis zu 30 C-Atomen beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Die Eigenschaften des Polyacrylats (Haftklebemasse; Heißsiegelmasse, viskoelastisches nichtklebriges Material und dergleichen) lassen sich insbesondere über eine Variation der Glasübergangstemperatur des Polymers durch unterschiedliche Gewichtsanteile der einzelnen Monomere beeinflussen.

Für rein kristalline Systeme gibt es am Schmelzpunkt $T_S$ ein thermisches Gleichgewicht zwischen Kristall und Flüssigkeit. Amorphe oder teilkristalline Systeme sind hingegen durch die Umwandlung der mehr oder weniger harten amorphen bzw. teilkristallinen Phase in eine weichere (gummiartige bis zähflüssige) Phase gekennzeichnet. Am Glaspunkt kommt es insbesondere bei polymeren Systemen zum "Auftauen" (bzw. "Einfrieren" beim Abkühlen) der Brownschen Molekularbewegung längerer Kettensegmente. Der Übergang vom Schmelzpunkt $T_S$ (auch "Schmelztemperatur"; eigentlich nur für reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Im Rahmen dieser Schrift wird im Sinne der vorstehenden Ausführung bei der Angabe des Glaspunktes der Schmelzpunkt mit umfasst, es wird also unter dem Glasübergangspunkt (oder gleichbedeutend auch unter der Glasübergangstemperatur) auch der Schmelzpunkt für die entsprechenden "schmelzenden" Systeme verstanden. Die Angaben der Glasübergangstemperaturen beziehen sich auf die Bestimmung mittels dynamisch mechanischer Analyse (DMA) bei geringen Frequenzen.

Zur Erzielung von Polymeren, beispielsweise Haftklebemassen oder Heißsiegelmassen, mit gewünschten Glasübergangstemperaturen wird die mengenmäßige Zusammensetzung der Monomermischung vorzugsweise derart gewählt, dass sich nach einer Gleichung (G1) in Analogie zur Fox-Gleichung (vgl. T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Bevorzugt wird ein Polyacrylat eingesetzt, dass auf die folgende Monomerzusammensetzung zurückgeführt werden kann:

a) Acrylsäureester und/oder Methacrylsäureester der folgenden Formel

$$CH_2 = C(R^I)(COOR^{II})$$

wobei $R^I$ = H oder $CH_3$ und $R^{II}$ ein Alkylrest mit 4 bis 14 C-Atomen ist,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) derart gewählt, dass das Polymerisationsprodukt insbesondere eine Glastemperatur $\leq 15\ °C$ (DMA bei geringen Frequenzen) aufweist.

Es ist insbesondere zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Soll das Polyacrylat als Heißschmelzkleber, also als ein Material, welches erst durch Erwärmen haftklebrig wird, verwendet werden, werden die Anteile der Komponenten (a), (b), und (c) insbesondere derart gewählt, dass das Copolymer eine Glasübergangstemperatur $(T_G)$ zwischen 15 °C und 100 °C aufweist, bevorzugt zwischen 30 °C und 80°C, besonders bevorzugt zwischen 40°C und 60°C. Ein viskoelastisches Material, das typischerweise beidseitig mit haftklebrigen Schichten kaschiert sein kann, hat insbe-

EP 2 617 788 B1

sondere eine Glasübergangstemperatur ($T_G$) zwischen - 50 °C bis +100 °C, bevorzugt zwischen -20 °C bis + 60°C, besonders bevorzugt 0°C bis 40°C. Die Anteile der Komponenten (a), (b), und (c) sind auch hier entsprechend zu wählen.

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie z. B. 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit den Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:

Methylacrylat, Ethylacrylat, Propylacrylat, Methylmethacrylat, Ethylmethacrylat, Benzylacrylat, Benzylmethacrylat, sec-Butylacrylat, *tert*-Butylacrylat, Phenylacrylat, Phenylmethacrylat, Isobornylacrylat, Isobornylmethacrylat, *tert*-Butylphenylacrylat, *tert*-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methylundecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N,N*-Dialkyl-substituierte Amide, wie beispielsweise *N,N*-Dimethylacrylamid, *N,N*-Dimethylmethacrylamid, *N*-Benzylacrylamide, *N*-Isopropylacrylamid, *N-tert*-Butylacrylamid, *N-tert*-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, *N-tert*-Butylacrylamid und Allylacrylat.

Die Herstellung der Polyacrylate kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, vorzugsweise von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt.

Prinzipiell eignen sich alle dem Fachmann geläufigen, üblichen Initiatoren. Beispiele für Radikalquellen sind Peroxide, Hydroperoxide und Azoverbindungen, z.B. Dibenzoylperoxid, Cumolhydroperoxid, Cyclohexanonperoxid, Di-*t*-butylperoxid, Cyclohexylsulfonylacetylperoxid, Diisopropylpercarbonat, *t*-Butylperoktoat, Benzpinacol. In einer sehr bevorzugten Vorgehensweise wird als radikalischer Initiator 2,2'-Azobis(2-methylbutyronitril) (Vazo® 67™ der Fa. Du-Pont) oder 2,2'-Azobis(2-methylpropionitril) (2,2'-Azobisisobutyronitril; AIBN; Vazo® 64™ der Fa. DuPont) verwendet.

Als Lösungsmittel kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsgemisch, enthalten, vorgezogen werden.

Die gewichtsmittleren Molekulargewichte $M_W$ der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol [die Angaben des mittleren Molekulargewichtes $M_W$ und der Polydisperistät PD in dieser Schrift beziehen sich auf die Bestimmung per Gelpermeationschromatographie (siehe Messmethode A2; experimenteller Teil)]. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Das Polyacrylat hat vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und Viskosität des Polymerisats.

Erfindungsgemäß besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht das niedrigere Molekulargewicht eine leichtere Verarbeitung aus der Schmelze, da die Fließviskosität gegenüber einem breiter verteilten Polyacrylat bei weitgehend gleichen Anwendungseigenschaften geringer ist. Eng verteilte Polyacrylate können vorteilhaft durch anionische Polymerisation oder durch kontrollierte radikalische Polymerisationsmethoden hergestellt werden, wobei letzteres besonders gut geeignet ist. Beispiele für derartige Polyacrylate, die nach dem RAFT Verfahren hergestellt werden, sind in der US 6,765,078 B2 und US 6,720,399 B2 beschrieben. Auch über N-Oxyle lassen sich entsprechende Polyacrylate herstellen, wie beispielsweise in der EP 1 311 555 B1 beschrieben ist. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind in den Schriften US 5,945,491 A, US 5,854,364 A und US 5,789,487 A beschrieben.

Die zu vernetzenden Polyacrylate enthalten funktionelle Gruppen, die geeignet sind, mit Epoxidgruppen Verknüpfungsreaktionen einzugehen. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit den die Epoxidgruppen tragenden Bausteinen, insbesondere im Sinne einer Vernetzung der die funktionellen Gruppen tragenden Polymerbausteine über die Epoxidgruppen tragenden Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es insgesamt zu einer mittelbaren Verknüpfung der die funktionellen Gruppen tragenden Bausteine.

Die erfindungsgemäße vernetzbare Zusammensetzung kann zumindest ein klebrig machendes Harz enthalten. Als klebrig machende Harze sind die vorbekannten und in der Literatur beschriebenen Klebharze einsetzbar. Insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugt lassen sich Pinen-, Inden- und Kolophoniumharze einsetzen, deren disproportionierte, hydrierte, polymerisierte, veresterte Derivate und Salze, Terpenharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Zusammensetzung wunschgemäß einzustellen. Besonders bevorzugt lassen sich alle mit dem entsprechenden Polyacrylat kompatiblen (löslichen) Harze einsetzen. Besonders bevorzugt enthält die erfindungsgemäße vernetzbare Zusammensetzung Terpenphenolharze und/oder Kolophoniumester.

Optional kann die erfindungsgemäße vernetzbare Zusammensetzung auch pulver- und/oder granulatförmige Füllstoffe, Farbstoffe und Pigmente, insbesondere auch abrasive und verstärkende Füllstoffe wie zum Beispiel Kreiden

(CaCO$_3$), Titandioxide, Zinkoxide und Ruße auch zu hohen Anteilen, das heißt von 1 bis 50 Gew.-%, bezogen auf die Gesamtrezeptur, enthalten. Sehr bevorzugt können verschiedene Kreideformen als Füllstoff eingesetzt werden, wobei besonders bevorzugt Mikrosöhl-Kreide eingesetzt wird. Bei bevorzugten Anteilen bis zu 30 Gew.-%, bezogen auf die gesamte Zusammensetzung, verändern sich die klebtechnischen Eigenschaften (Scherfestigkeit bei RT, Sofortklebkraft auf Stahl und PE) durch den Füllstoffzusatz praktisch nicht.

Weiterhin können schwerentflammbare Füllstoffe wie beispielsweise Ammoniumpolyphosphat; elektrisch leitfähige Füllstoffe wie beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive wie beispielsweise Eisen-(III)-oxide; Additive zur Volumenerhöhung, insbesondere zur Herstellung geschäumter Schichten bzw. syntaktischer Schäume, wie beispielsweise Blähmittel, Glasvollkugeln, Glashohlkugeln, carbonisierte Mikrokugeln, phenolische Mikrohohlkugeln Mikrokugeln aus anderen Materialien, expandierbare Microballons (Expancel® der Fa. AkzoNobel), Kieselsäure, Silicate, organisch nachwachsende Rohstoffe wie beispielsweise Holzmehl, organische und/oder anorganische Nanopartikel, Fasern; Alterungsschutzmittel, Lichtschutzmittel, Ozonschutzmittel, Compoundierungsmittel und/oder Blähmittel in der vernetzbaren Zusammensetzung beziehungsweise in der fertig vernetzten Zusammensetzung enthalten sein. Als Alterungsschutzmittel können bevorzugt sowohl primäre, z.B. 4-Methoxyphenol oder Irganox® 1076, als auch sekundäre Alterungsschutzmittel, z.B. Irgafos® TNPP oder Irgafos® 168 der Fa. BASF, gegebenenfalls auch in Kombination miteinander, eingesetzt werden. Als weitere Alterungsschutzmittel können Phenothiazin (C-Radikalfänger) sowie Hydrochinonmethylether in Gegenwart von Sauerstoff sowie Sauerstoff selbst eingesetzt werden.

Optional können übliche Weichmacher (Plastifizierungsmittel), insbesondere in Konzentrationen von bis zu 5 Gew.-%, zugesetzt werden. Als Weichmacher können beispielsweise niedermolekulare Polyacrylate, Phthalate, wasserlösliche Weichmacher, Weichharze, Phosphate, Polyphosphate, Adipate und/oder Citrate zudosiert werden.

Weiterhin optional kann das beziehungsweise können die thermisch vernetzbare(n) beziehungsweise vernetzte(n) Polyacrylat(e) erfindungsgemäß auch mit anderen Polymeren abgemischt sein. Hierzu eignen sich Polymere auf Basis von Naturkautschuk, Synthesekautschuk, EVA, Siliconkautschuk, Acrylkautschuk und Polyvinylether. Es hat sich als zweckmäßig erwiesen, diese Polymere in granulierter oder andersartig zerkleinerter Form dem Polyacrylat vor Zugabe des thermischen Vernetzers zuzusetzen. Die Herstellung der Polymerblends erfolgt bevorzugt in einem Extruder, stärker bevorzugt in einem Mehrwellenextruder oder in einem Planetwalzenextruder. Zur Stabilisierung der thermisch vernetzten Polyacrylate, insbesondere von Polymerblends aus thermisch vernetzten Acrylathotmelts und anderen Polymeren, kann es sinnvoll sein, das ausgeformte Material mit Elektronenbestrahlung in geringer Dosis zu bestrahlen. Optional können zu diesem Zweck dem Polycrylat Vernetzungspromotoren wie di-, tri-, oder multifunktionelles Acrylat, Polyester und/oder Urethanacrylat zugesetzt werden.

Ein weiterer Gegenstand der Erfindung ist ein vernetztes Polyacrylat, das durch thermische Vernetzung der erfindungsgemäßen vernetzbaren Zusammensetzung erhältlich ist.

Ein weiterer Gegenstand der Erfindung ist ein Verfahren zur thermischen Vernetzung von Polyacrylaten mit funktionellen Gruppen, die geeignet sind, mit Epoxidgruppen Verknüpfungsreaktionen einzugehen, das den Einsatz eines erfindungsgemäßen Vernetzer-Beschleuniger-Systems umfasst.

Das erfindungsgemäße Verfahren kann eine Aufkonzentration der aus der Polymerherstellung resultierenden Polyacrylat-Lösung oder -Dispersion umfassen. Die Aufkonzentration des Polymerisats kann in Abwesenheit der Vernetzer- und Beschleunigersubstanzen geschehen. Es ist aber auch möglich, maximal eine dieser Substanzen dem Polymerisat bereits vor der Aufkonzentration zuzusetzen, so dass die Aufkonzentration dann in Gegenwart dieser Substanz(en) erfolgt.

Die Polymerisate werden dann vorzugsweise in einen Compounder überführt. In besonderen Ausführungen des erfindungsgemäßen Verfahrens können die Aufkonzentration und die Compoundierung im selben Reaktor stattfinden.

Insbesondere kann als Compounder ein Extruder eingesetzt werden. Die Polymerisate liegen im Compounder bevorzugt in der Schmelze vor, entweder weil sie bereits im Schmelzezustand eingegeben werden oder indem sie im Compounder bis zur Schmelze erhitzt werden. Vorteilhafterweise werden die Polymerisate im Compounder durch Beheizung in der Schmelze gehalten.

Solange weder Vernetzer (Epoxide) noch Beschleuniger im Polymerisat vorliegen, wird die mögliche Temperatur in der Schmelze durch die Zersetzungstemperatur des Polymerisats begrenzt. Die Prozesstemperatur im Compounder liegt üblicherweise zwischen 80 bis 150 °C, insbesondere zwischen 100 und 120 °C.

Die epoxidgruppenhaltigen Substanzen werden dem Polymerisat vorzugsweise vor oder mit der Beschleunigerzugabe zugesetzt. Sie können den Monomeren bereits vor oder während der Polymerisationsphase zugegeben werden, wenn sie für diese hinreichend stabil sind. Besonders bevorzugt werden die epoxidgruppenhaltigen Substanzen dem Polymerisat aber entweder vor der Zugabe in den Compounder oder bei der Zugabe in den Compounder zugesetzt, also zusammen mit den Polymerisaten in den Compounder gegeben.

In sehr bevorzugter Vorgehensweise werden die Beschleunigersubstanzen den Polymerisaten kurz vor der Weiterverarbeitung, insbesondere einer Beschichtung oder anderweitigen Ausformung, zugesetzt. Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden. Mit dem erfindungsgemäßen Verfahren können Topfzeiten von einigen Minuten bis zu einigen zehn Minuten erzielt werden (je nach Wahl der Versuchsparameter), so dass der Beschleuniger innerhalb dieser Zeitspanne vor der Beschichtung zugesetzt werden sollte. Vorteilhaft wird der Beschleuniger so spät wie möglich der Schmelze zugesetzt, aber so früh wie nötig, so dass noch eine gute Homogenisierung mit der Polymermasse erfolgt.

Als sehr vorteilhaft haben sich hier Zeitspannen von 2 bis 10 Minuten, insbesondere von mehr als 5 Minuten, vor Beginn der Weiterverarbeitung bei einer Prozesstemperatur von 110 bis 120 °C herausgestellt.

Die Vernetzer (Epoxide) und die Beschleuniger können auch beide kurz vor der Weiterverarbeitung des Polymers zugesetzt werden, also vorteilhaft in der Phase, wie sie vorstehend für die Beschleuniger dargestellt ist. Hierzu ist es vorteilhaft, wenn Vernetzer und Beschleuniger an ein- und derselben Stelle gleichzeitig in den Prozess eingebracht werden, gegebenenfalls als Epoxid-Beschleuniger-Abmischung.

Grundsätzlich ist es auch möglich, die Zugabezeitpunkte bzw. Zugabestellen für Vernetzer und Beschleuniger in den oben dargestellten Ausführungen zu vertauschen, so dass der Beschleuniger vor den epoxidgruppenhaltigen Substanzen zugesetzt werden kann.

Im Compoundierungsprozess beträgt die Temperatur des Polymerisats bei der Zugabe der Vernetzer und/oder der Beschleuniger bevorzugt zwischen 50 und 150 °C, stärker bevorzugt zwischen 70 und 130 °C und besonders bevorzugt zwischen 80 und 120 °C.

Es hat sich grundsätzlich als sehr vorteilhaft herausgestellt, wenn man den Vernetzer, also die epoxidgruppenhaltige Substanz, zu 0,1 - 5 Gew-%, bevorzugt zu 0,15 - 0,4 Gew.-%, bezogen auf das Polymer ohne Additive, hinzusetzt. Vorteilhaft ist es, den Beschleuniger zu 0,05 - 5 Gew-%, bevorzugt zu 0,1 - 1,2 Gew.-%, bezogen auf das additivfreie Polymer, zuzugeben. Besonders vorteilhaft ist es, wenn der Vernetzeranteil derart gewählt wird, dass ein elastischer Anteil der vernetzten Polyacrylate von mindestens 20 % resultiert. Bevorzugt beträgt der elastische Anteil mindestens 40 %, weiter bevorzugt mindestens 60 % (jeweils gemessen nach Messmethode H3; vgl. experimenteller Teil).

Nach der Beschichtung kühlt die Polymermasse relativ rasch aus, und zwar bis auf die Lagerungstemperatur, in der Regel auf Raumtemperatur. Das erfindungsgemäße Vernetzer-Beschleuniger-System ist hervorragend geeignet, ohne die Zufuhr von weiterer thermischer Energie (ohne Wärmezufuhr) die Vernetzungsreaktion voranschreiten zu lassen. Der/Die erfindungsgemäße(n) Beschleuniger sowie Beschleunigerkonzentrationen können vorteilhaft derart gewählt werden, dass der elastische Anteil des Polyacrylats nach Verlassen des Compoundierprozesses bei niedrigeren Temperaturen als im Prozess, beispielsweise bei Raumtemperatur, innerhalb einer Woche, bevorzugt innerhalb von drei Tagen einen Wert von 25 %, bevorzugt von 35 % überschreitet, sodass schon ein funktionsfähiges Produkt (insbesondere ein Klebeband oder eine funktionsfähige Trägerschicht auf Basis des Polyacrylats) vorliegt.

Die Vernetzungsreaktion zwischen den funktionellen Gruppen des Polyacrylats und den Epoxiden mittels des erfindungsgemäßen Vernetzer-Beschleuniger-Systems verläuft also auch ohne Wärmezufuhr bei Normalbedingungen, insbesondere bei Raumtemperatur vollständig ab.

Zur Angabe der Verhältnisse der Bestandteile des erfindungsgemäßen Vernetzer-Beschleuniger-Systems zueinander beziehungsweise zum zu vernetzenden Polyacrylat kann das Verhältnis der Anzahl der Epoxidgruppen im Vernetzer zur Anzahl der reaktiven funktionellen Gruppen im Polyacrylat herangezogen werden. Grundsätzlich kann dieses Verhältnis frei gewählt werden, so dass entweder ein Überschuss an funktionellen Gruppen, zahlenmäßige Gleichheit der Gruppen oder ein Überschuss an Epoxidgruppen vorliegt.

Bevorzugt wird dieses Verhältnis derart gewählt, dass die Epoxidgruppen im Unterschuss bis maximal zur anzahlmäßigen Gleichheit vorliegen; ganz besonders bevorzugt liegt das Verhältnis der Gesamtzahl der Epoxidgruppen im Vernetzer zur Anzahl der funktionellen Gruppen im Polyacrylat, die geeignet sind, mit Epoxidgruppen Verknüpfungsreaktionen einzugehen, im Bereich von 0,01 : 1 bis 1 : 1, insbesondere im Bereich von 0,02 : 1 bis 0,4 : 1.

Bevorzugt liegen also die funktionellen Gruppen, besonders bevorzugt Carbonsäuregruppen, im Polyacrylat bezüglich der Epoxidgruppen im Überschuss vor, sodass es im Polymerisat hinreichend viele funktionelle Gruppen - also potentielle Vernetzungs- oder Verknüpfungsstellen - gibt, um die gewünschte Vernetzung zu erzielen.

Das Verhältnis der Anzahl beschleunigungswirksamer Gruppen im Beschleuniger zur Anzahl der Epoxidgruppen im Vernetzer kann grundsätzlich frei gewählt werden, so dass entweder ein Überschuss an beschleunigungswirksamen Gruppen, zahlenmäßige Gleichheit der Gruppen oder ein Überschuss an Epoxidgruppen vorliegt. Als beschleunigungswirksame Gruppen werden Aminogruppen und Phosphinogruppen angesehen, worunter alle primären, sekundären und tertiären, mithin sowohl alle substituierten als auch unsubstituierten Amino- und Phosphinogruppen verstanden werden.

Bevorzugt beträgt das Verhältnis der Anzahl aller substituierten und unsubstituierten Amino- und Phosphinogruppen im Beschleuniger zur Anzahl der Epoxidgruppen im Vernetzer von 0,2 : 1 bis 4 : 1.

Nach der Compoundierung der Masse kann die Weiterverarbeitung des Polymers, insbesondere die Beschichtung auf einen permanenten oder auf einen temporären Träger, erfolgen. Ein permanenter Träger bleibt bei der Anwendung mit der Klebemassenschicht verbunden, während der temporäre Träger in dem weiteren Verarbeitungsprozess, zum Beispiel der Konfektionierung des Klebebandes, oder bei der Anwendung von der Klebemassenschicht entfernt wird.

Die Beschichtung der Selbstklebemassen kann mit dem Fachmann bekannten Hotmelt-Beschichtungsdüsen oder bevorzugt mit Walzenauftragswerken, auch Beschichtungskalander genannt, erfolgen. Die Beschichtungskalander können vorteilhaft aus zwei, drei, vier oder mehr Walzen bestehen.

Bevorzugt ist zumindest eine der Walzen mit einer anti-adhäsiven Walzenoberfläche versehen, bevorzugt alle Walzen, die mit dem Polyacrylat in Berührung kommen. Es können in günstiger Vorgehensweise alle Walzen des Kalanders anti-adhäsiv ausgerüstet sein. Als anti-adhäsive Walzenoberfläche wird bevorzugt ein Stahl-Keramik-Silikon-Verbundwerkstoff eingesetzt. Derartige Walzenoberflächen sind gegen thermische und mechanische Belastungen resistent.

Es hat sich als besonders vorteilhaft herausgestellt, wenn Walzenoberflächen eingesetzt werden, die eine Oberflächenstruktur aufweisen, insbesondere in der Art, dass die Fläche keinen vollständigen Kontakt zur zu verarbeitenden Polymerschicht herstellt, sondern dass die Kontaktfläche - verglichen mit einer glatten Walze - geringer ist. Besonders günstig sind strukturierte Walzen wie Metall-Rasterwalzen, beispielsweise Stahlrasterwalzen.

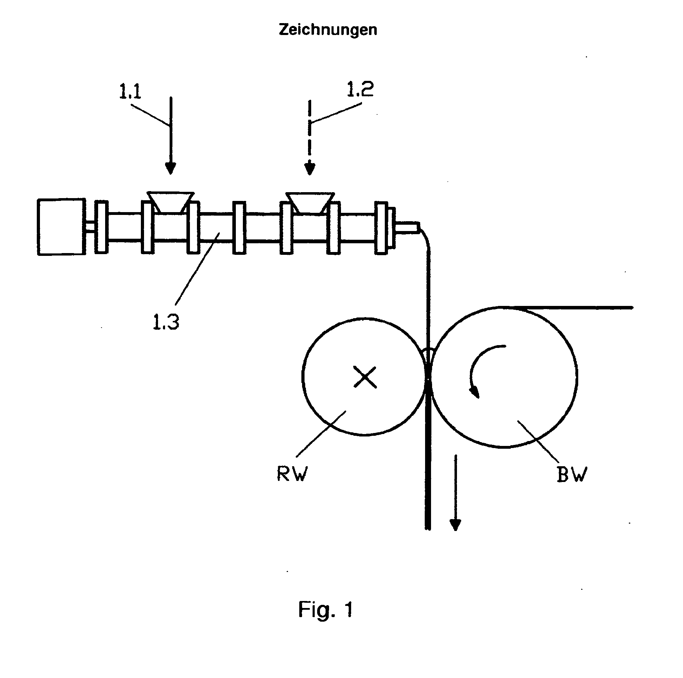

Die Beschichtung kann insbesondere vorteilhaft entsprechend den Beschichtungsverfahren, wie sie in der WO 2006/027387 A1 von Seite 12, Zeile 5 bis Seite 20, Zeile 13 dargestellt sind, und zwar insbesondere unter den Abschnitten "Variante A" (Seite 12), "Variante B" (Seite 13), "Variante C" (Seite 15), "Verfahren D" (Seite 17), "Variante E" (Seite 19) sowie die Figuren Fig. 1 bis 6. Die genannten Offenbarungsstellen aus der WO 2006/027387 A1 seien daher explizit in den Offenbarungsgehalt der vorliegenden Schrift eingeschlossen.

Bei der Beschichtung können insbesondere bei Einsatz von Mehrwalzenkalandern Beschichtungsgeschwindigkeiten bis 300 m/min verwirklicht werden.

An Fig. 1 der vorliegenden Schrift ist beispielhaft der Compoundierungs- und Beschichtungsprozess anhand eines kontinuierlichen Ablaufs dargestellt. Die Polymere werden an der ersten Eingabestelle (1.1) in den Compounder (1.3), hier beispielsweise ein Extruder, gegeben. Entweder erfolgt die Eingabe bereits in der Schmelze, oder die Polymere werden im Compounder bis zur Schmelze erhitzt. Vorteilhaft werden an der ersten Eingabestelle mit dem Polymer die epoxidhaltigen Verbindungen in den Compounder gegeben.

Kurz vor der Beschichtung werden an einer zweiten Eingabestelle (1.2) die Beschleuniger zugesetzt. Dies hat den Erfolg, dass die Beschleuniger den epoxidhaltigen Polymeren erst kurz vor der Beschichtung zugesetzt werden und die Reaktionszeit in der Schmelze gering ist.

Die Reaktionsführung kann auch diskontinuierlich erfolgen. In entsprechenden Compoundern wie beispielsweise Reaktorkesseln kann die Zugabe der Polymere, der Vernetzer und der Beschleuniger zeitversetzt und nicht, wie in der Figur 1 dargestellt, ortsversetzt stattfinden.

Direkt nach der Beschichtung - bevorzugt mittels Walzenauftrag oder mittels Extrusionsdüse - ist das Polymer nur leicht anvernetzt, aber noch nicht ausreichend vernetzt. Die Vernetzungsreaktion verläuft bevorzugt überwiegend auf dem Träger.

Durch die Vernetzung erhöhen sich die Kohäsion des Polymers und damit auch die Scherfestigkeit. Die Verknüpfungen sind sehr stabil. Dies ermöglicht die Herstellung sehr alterungsstabiler und wärmebeständiger Produkte wie Klebebänder, viskoelastische Trägermaterialien oder Formkörper.

Die physikalischen Eigenschaften des Endproduktes, insbesondere dessen Viskosität, Klebkraft und Anfassklebrigkeit, können durch den Grad der Vernetzung beeinflusst werden, so dass sich durch geeignete Wahl der Reaktionsbedingungen das Endprodukt optimieren lässt. Diverse Faktoren bestimmen das Prozessfenster dieses Verfahrens. Die wichtigsten Einflussgrößen sind die Mengen (Konzentrationen und Verhältnisse zueinander), die chemische Beschaffenheit der Vernetzer und der Beschleuniger, die Prozess- und Beschichtungstemperatur, die Verweilzeit im Compoundierer (insbesondere Extruder) und im Beschichtungsaggregat, der Anteil an funktionellen Gruppen, insbesondere Säuregruppen und/oder Hydroxygruppen im Polymerisat sowie das mittlere Molekulargewicht des Polyacrylats.

Das erfindungsgemäße Vernetzer-Beschleuniger-System bietet in Verfahren zur Vernetzung von Polyacrylaten den Vorteil, dass ein stabiler Vernetzungsprozess für Polyacrylate angeboten werden kann, und zwar mit hervorragender Steuerungsmöglichkeit bezüglich des Vernetzungsbildes durch weitgehende Entkoppelung von Vernetzungsgrad und Reaktivität (Reaktionskinetik), insbesondere der Reaktionskinetik bei niedrigen Temperaturen. Die zugesetzte Vernetzermenge (Epoxidmenge) beeinflusst dabei weitgehend den Vernetzungsgrad des Produktes, die chemische Natur und die Konzentration des Beschleunigers steuern weitgehend die Reaktivität.

Überraschenderweise konnte festgestellt werden, dass sich durch die Menge der zugesetzten epoxidhaltigen Substanzen der Vernetzungsgrad vorwählen ließ, und zwar weitgehend unabhängig von den üblicherweise zusätzlich zu wählenden Verfahrensparametern Temperatur und Menge an zugesetztem Beschleuniger.

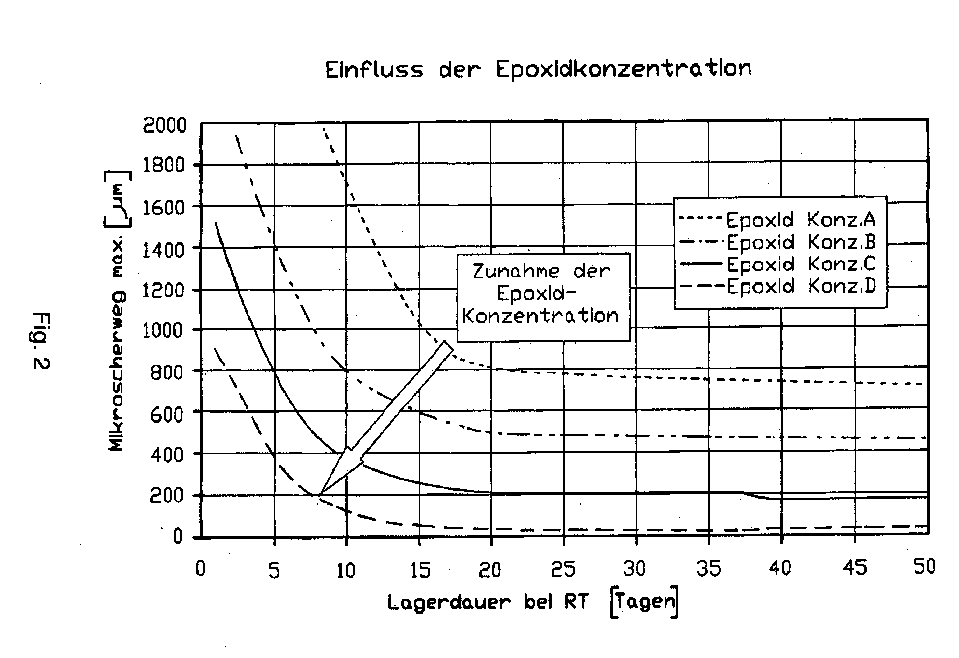

Den Einfluss der Epoxidgruppenkonzentration auf den Vernetzungsgrad bei gleich bleibender Beschleunigermenge und Temperatur zeigt schematisch Fig. 2. Dabei steigt die Beschleunigerkonzentration von der Konzentration A (obere Kurve; niedrige Konzentration) über die Konzentrationen B (zweitniedrigste Konzentration) und C (zweithöchste Konzentration) auf die Konzentration D (untere Kurve; höchste Konzentration) an. Wie sich zeigt, steigt der Endwert des Vernetzungsgrades - hier dargestellt durch geringer werdende Werte des Mikroscherwertes - mit ansteigender Epoxidkonzentration an, während die Reaktionskinetik nahezu unbeeinflusst bleibt.

Weiterhin wurde festgestellt, dass die zugesetzte Menge an Beschleuniger direkten Einfluss auf die Vernetzungsgeschwindigkeit, also auch den Zeitpunkt des Erreichens des End-Vernetzungsgrades hat, ohne diesen aber absolut zu beeinflussen. Dabei kann die Reaktivität der Vernetzungsreaktion so gewählt werden, dass die Vernetzung auch bei der Lagerung des fertigen Produktes bei den dort üblichen Bedingungen (Raumtemperatur) innerhalb weniger Wochen zu dem gewünschten Vernetzungsgrad führt, insbesondere ohne dass noch thermische Energie (aktiv) zugeführt werden müsste oder dass das Produkt weiter behandelt werden müsste.

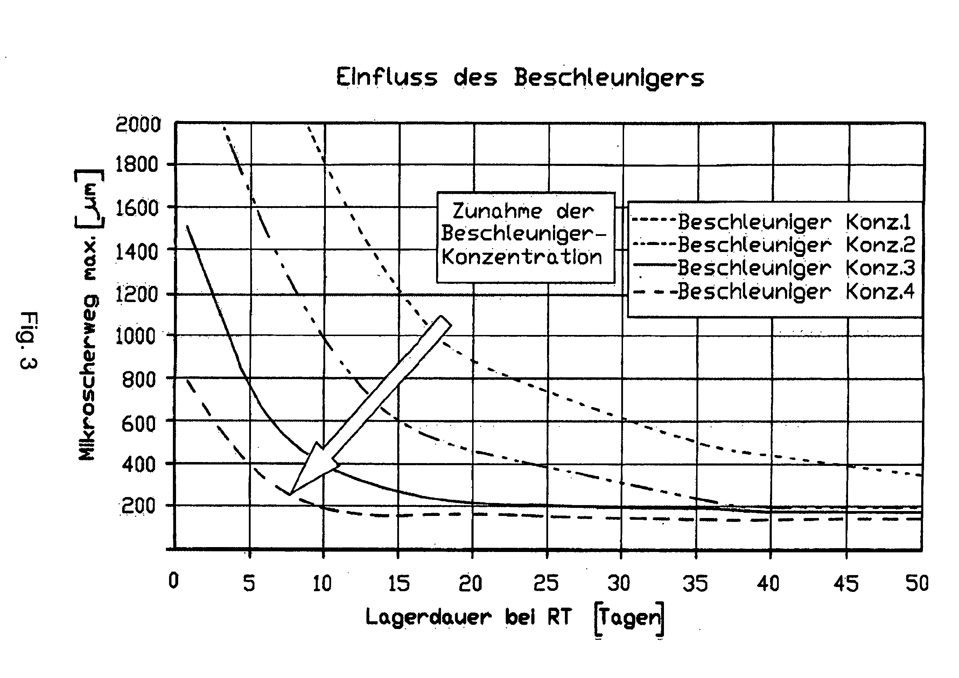

Die Abhängigkeit der Vernetzungszeit von der Beschleunigerkonzentration bei gleich bleibender Temperatur (hier Raumtemperatur) und konstanter Epoxidmenge ist schematisch in Fig. 3 wiedergegeben. Dabei steigt die Beschleunigerkonzentration von der Konzentration 1 (obere Kurve; niedrige Konzentration) über die Konzentrationen 2 (zweitniedrigste Konzentration) und 3 (zweithöchste Konzentration) auf die Konzentration 4 (untere Kurve; höchste Konzentration) an. Hier zeigt sich, dass der Endwert des Vernetzungsgrades nahezu konstant bleibt (bei der geringsten Reaktion ist dieser Wert noch nicht erreicht); dieser Wert bei hohen Beschleunigerkonzentrationen aber schneller erreicht wird als bei niedrigen Beschleunigerkonzentrationen.

Zusätzlich zu den vorgenannten Parametern kann die Reaktivität der Vernetzungsreaktion auch durch Variation der Temperatur beeinflusst werden, wenn dies gewünscht ist, insbesondere in den Fällen, wo der Vorteil der "Eigenvernetzung" während der Lagerung bei üblichen Bedingungen keine Rolle spielt. Bei gleich bleibender Vernetzerkonzentration führt eine Erhöhung der Prozesstemperatur zu einer verringerten Viskosität. Dies verbessert die Beschichtbarkeit der Masse, reduziert jedoch die Verarbeitungszeit.

Eine Erhöhung der Verarbeitungszeit erhält man durch Verringerung der Beschleunigerkonzentration, Erniedrigung des Molekulargewichts, Verringerung der Konzentation an funktionellen Gruppen im Polymerisat, Verringerung des Säureanteils im Polymerisat, Verwendung von weniger reaktiven Vernetzern (Epoxiden) bzw. weniger reaktiven Vernetzer-Beschleuniger-Systemen und Verringerung der Prozesstemperatur. Eine Kohäsionsverbesserung der Masse kann auf unterschiedlichen Wegen erhalten werden. Entweder wird die Beschleunigerkonzentration erhöht, was die Verarbeitungszeit reduziert. Es kann bei gleich bleibender Beschleunigerkonzentration auch das Molekulargewicht des Polyacrylats erhöht werden, was möglicherweise effizienter ist. Im erfindunsgemäßen Sinne ist es jedenfalls vorteilhaft, die Vernetzerkonzentration (epoxidgruppenhaltige Substanzen) zu erhöhen. Je nach gewünschtem Anforderungsprofil der Masse bzw. des Produktes müssen die oben genannten Parameter in geeigneter Weise angepasst werden.

Ein weiterer Gegenstand der Erfindung ist die Verwendung eines erfindungsgemäßen Vernetzer-Beschleuniger-Systems zur Herstellung thermisch vernetzter Polyacrylate.

Erfindungsgemäß vernetzte Polyacrylate können für breitgefächerte Anwendungen eingesetzt werden. Nachstehend seien einige besonders vorteilhafte Einsatzgebiete beispielhaft dargestellt.

Ein mit dem erfindungsgemäßen Vernetzer-Beschleuniger-System vernetztes Polyacrylat wird insbesondere als Haftklebemasse verwendet, bevorzugt als Haftklebemasse für ein Klebeband, wobei die Acrylathaftklebemasse als ein- oder doppelseitiger Film auf einer Trägerfolie vorliegt. Insbesondere gut geeignet sind diese Polyacrylate, wenn ein hoher Masseauftrag in einer Schicht gefordert ist, da mit diesem Beschichtungsverfahren ein nahezu beliebig hoher Masseauftrag, bevorzugt von mehr als 100 g/m$^2$, besonders bevorzugt von mehr als 200 g/m$^2$, möglich ist, und zwar insbesondere bei gleichzeitig homogener Vernetzung durch die Schicht hindurch. Günstige Anwendungen sind beispielsweise technische Klebebänder, insbesondere für den Einsatz im Bauwesen, z.B. Isolierbänder, Korrosionsschutzbänder, Aluminiumklebebänder, gewebeverstärkte Folienklebebänder (Duct-Tapes), Bauspezialklebebänder, z.B. Dampfsperren, Montageklebebänder, Kabelwickelbänder, selbstklebende Folien und/oder Papieretiketten.

Das erfindungsgemäß vernetzte Polyacrylat kann auch als Haftklebemasse für ein trägerloses Klebeband, ein sogenanntes Transferklebeband, angeboten werden. Auch hier ist der nahezu beliebig hoch einstellbare Masseauftrag bei gleichzeitig homogener Vernetzung durch die Schicht hindurch besonders vorteilhaft. Bevorzugte Flächengewichte sind mehr als 10 g/m$^2$ bis 5000 g/m$^2$, besonders bevorzugt 100 g/m$^2$ bis 3000 g/m$^2$.

Das erfindungsgemäß vernetzte Polyacrylat kann auch als Heißsiegelklebemasse in Transferklebebändem oder in ein- oder doppelseitigen Klebebändern vorliegen. Auch hier kann für trägerhaltige Haftklebebänder der Träger ein erfindungsgemäß erhaltenes viskoelastisches Polyacrylat sein.

Eine vorteilhafte Ausführungsform der unter Verwendung eines erfindungsgemäß vernetzten Polyacrylats erhaltenen Klebebänder kann als stripfähiges Klebeband verwendet werden, insbesondere derart, dass es durch Zug im Wesentlichen in der Verklebungsebene rückstandsfrei wieder abgelöst werden kann.

Das erfindungsgemäße Vernetzer-Beschleuniger-System beziehungsweise die erfindungsgemäße vernetzbare Zusammensetzung eignet sich auch besonders gut zur Herstellung von dreidimensionalen haftklebrigen oder auch nicht haftklebrigen Formkörpern. Ein besonderer Vorteil dieses Verfahrens ist, dass eine Schichtdickenbegrenzung des zu vernetzenden, auszuformenden Polyacrylats im Gegensatz zu UV- und ESH härtenden Verfahren nicht vorhanden ist. Entsprechend der Wahl des Beschichtungs- oder Ausformungsaggregates lassen sich somit beliebig geformte Gebilde herstellen, die dann unter milden Bedingungen zu gewünschter Festigkeit nachvernetzen können.

Besonders geeignet ist dieses System beziehungsweise diese Zusammensetzung auch zur Herstellung besonders dicker Schichten, insbesondere von Haftklebeschichten oder viskoelastischen Acrylatschichten mit einer Dicke oberhalb von 80 $\mu$m. Derartige Schichten sind mit der Lösemitteltechnik schlecht herstellbar, da diese beispielsweise Blasenbildung und sehr langsame Beschichtungsgeschwindigkeiten mit sich bringt. Das alternative Kaschieren dünner Schichten übereinander ist aufwendig und birgt Schwachstellen.

Dicke Haftklebeschichten können beispielsweise ungefüllt als Reinacrylat oder harzabgemischt oder mit organischen oder anorganischen Füllstoffen gefüllt vorliegen. Auch die Herstellung von nach den bekannten Verfahren offenzellig oder geschlossenzellig geschäumten Schichten sowie syntaktischer Schäume unter Verwendung des erfindungsgemäßen Vernetzer-Beschleuniger-Systems oder der erfindungsgemäßen thermisch vernetzbaren Zusammensetzung ist möglich. Als Methoden zur Schäumung sind die Schäumung über komprimierte Gase wie Stickstoff oder $CO_2$ oder die Schäumung über Blähmittel wie Hydrazine oder expandierbare Mikroballons möglich. Im Falle der Verwendung von expandierenden Mikroballons wird die Masse bzw. die ausgeformte Schicht vorteilhaft in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien zu glätten. Zur Herstellung schaumanaloger Schichten können dem haftklebrigen thermisch vernetzten Polyacrylat auch Glashohlkugeln oder bereits expandierte polymere Mikroballons zugesetzt werden.

Insbesondere können unter Verwendung erfindungsgemäßer Systeme beziehungsweise Zusammensetzungen auch dicke Schichten hergestellt werden, die als Trägerschicht für beidseitig mit Haftklebemasse beschichtete Klebebänder verwendet werden können. Besonders bevorzugt sind diesbezüglich gefüllte und geschäumte Schichten, die als Trägerschichten für schaumartige Klebebänder genutzt werden können. Auch bei diesen Schichten ist es sinnvoll, dem Polyacrylat vor dem Zusatz des Vernetzer-Beschleuniger-Systems oder des Vernetzers oder des Beschleunigers Glasvollkugeln, Glashohlkugeln oder expandierende Mikroballons zuzusetzen. Zu einer solchen schaumartigen, viskoelastischen Schicht kann mindestens einseitig eine Haftklebeschicht zukaschiert werden. Bevorzugt wird beidseitig eine Corona-vorbehandelte Polyacrylatschicht zukaschiert. Es können alternativ anders vorbehandelte Klebeschichten, also Haftklebeschichten und/oder hitzeaktivierbare Schichten auf der Basis anderer Polymere als auf Acrylatbasis zu der viskolelastischen Schicht zukaschiert werden. Geeignete Basispolymere sind Klebemassen auf Basis von Naturkautschuk, Synthesekautschuke, Acrylatblockcopolymere, Styrolblockcopolymere, EVA, bestimmte Polyolefine, spezielle Polyurethane, Polyvinylether und Silikone. Bevorzugt sind jedoch Massen, die keinen nennenswerten Anteil an migrierfähigen Bestandteilen haben und die mit dem Polyacrylat so gut verträglich sich, dass sie in signifikanter Menge in die Acrylatschicht eindiffundieren und dort die Eigenschaften verändern.

Statt beidseitig eine Haftklebeschicht zu kaschieren, kann auch mindestens einseitig eine Schmelzklebeschicht oder thermisch aktivierbare Klebschicht verwendet werden. Derartige asymmetrische Klebbänder erlauben das Verkleben kritischer Substrate mit hoher Verklebungsfestigkeit. Ein derartiges Klebeband kann beispielsweise zur Befestigung von EPDM-Gummiprofilen an Fahrzeugen verwendet werden.

Ein besonderer Vorteil der erfindungsgemäß vernetzten Polyacrylate besteht darin, dass diese Schichten, ob als viskoelastischer Träger, als Haftklebemasse oder als Heißsiegelmasse genutzt, bei gleicher Oberflächengüte kein Vernetzungsprofil durch die Schicht (bzw. entsprechend den aus den Polyacrylaten hergestellten Formkörper) - insbesondere im Gegensatz zu UV- und ESH-vernetzten Schichten - zeigen. Dadurch lässt sich die Balance zwischen adhäsiven und kohäsiven Eigenschaften durch die Vernetzung ideal für die gesamte Schicht steuern und einstellen. Bei strahlenchemisch vernetzten Schichten hingegen ist generell eine Seite oder eine Teilschicht über- oder untervernetzt.

Beispiele

Messmethoden (allgemein):

K-Wert (nach FIKENTSCHER) (Messmethode A1):

Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 1967, 8, 381 ff.)

Gelpermeationschromatographie GPC (Messmethode A2):

Die Angaben des gewichtsmittleren Molekulargewichtes $M_W$ und der Polydispersität PD in dieser Schrift beziehen sich auf die Bestimmung per Gelpermeationschromatographie. Die Bestimmung erfolgt an 100 $\mu$L klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 p, $10^3$ Å, ID 8,0 mm x 50 mm verwendet. Zur Auftrennung werden die Säulen des Typs PSS-SDV, 5 p, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex R171). Die Durchflussmenge beträgt 1,0 mL pro Minute. Die Kalibrierung erfolgt gegen PMMA-Standards (Polymethylmethacrylat-Kalibrierung)].

Feststoffgehalt (Messmethode A3):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

Messmethoden (Haftklebemassen):

180° Klebkrafttest (Messmethode H1):

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.
Die Messergebnisse sind in N/cm angegeben und sind gemittelt aus drei Messungen. Analog wurde die Klebkraft auf Polyethylen (PE) bestimmt.

Scherstandzeit (Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.
Bei Raumtemperatur wurde ein Gewicht von 1 kg an dem überstehenden Ende des Klebebandes befestigt. Die Messung wird bei Normalklima (23 °C, 55 % Luftfeuchtigkeit) und bei 70 °C in einem Wärmeschrank durchgeführt.
Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Mikroschertest (Messmethode H3):

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhle · Breite = 13mm · 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min) ·100 / max].

Messmethoden (Dreischichtenaufbauten):

90° Klebkraft Stahl - offene und abgedeckte Seite (Messmethode V1):

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Dreischichtverbundes wurde dann mit einer 50 $\mu$m Aluminiumfolie abgedeckt, wodurch verhindert wird, dass sich das Muster bei der Messung dehnt. Danach erfolgte das Anrollen des Prüfmusters auf den Stahluntergrund. Hierzu wurde das Tape mit einer 2 kg Rolle fünfmal hin und her bei einer Aufrollgeschwindigkeit von 10 m/min überrollt. Unmittelbar nach dem Anrollen wurde die Stahlplatte in eine spezielle Halterung geschoben, die es ermöglicht, das Muster in einem Winkel von 90 °C senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Dreischichtverbundes zunächst gegen die 50 $\mu$m Aluminiumfolie kaschiert, das Trennmaterial entfernt und auf die Stahlplatte geklebt, analog angerollt und vermessen.
Die Messergebnisse beider Seiten, offen und abgedeckt, sind in N/cm angegeben und sind gemittelt aus drei Messungen.

Scherstandzeit - offene und abgedeckte Seite (Messmethode V2):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche beträgt 20 mm · 13 mm (Länge · Breite). Vor der Messung wurde die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wurde die offene Seite mit einer 50 $\mu$m Aluminiumfolie verstärkt und mit einer 2 kg Rolle zweimal hin und her überrollt. Anschließend wurde eine Gurtschlaufe am überstehenden Ende des Dreischichtverbundes angebracht. Das Ganze wurde dann an einer geeigneten Vorrichtung aufgehängt und mit 10 N belastet. Die Aufhängvorrichtung ist so beschaffen, dass das Gewicht die Probe in einem Winkel von 179 ° +/- 1 ° belastet. Dadurch ist sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 $\mu$m Aluminiumfolie verstärkt, das Trennmaterial entfernt und auf die Prüfplatte analog der Beschreibung geklebt. Die Messung wird bei Normalklima (23 °C, 55 % Luftfeuchtigkeit) durchgeführt.

Kommerziell erhältliche, eingesetzte Chemikalien

| Chemische Verbindung | Handelsname | Hersteller | CAS-Nr. |
|---|---|---|---|
| 2,2'-Azobis(2-methylbutyronitril) | Vazo® 67 | DuPont | 13472-08-7 |
| 2,2'-Atobis(isobutyronitril), AIBN | Vazo® 64 | DuPont | 78-67-1 |
| Bis-(4-*tert*-butylcyclohexyl)peroxydicarbonat | Perkadox® 16 | Akzo Nobel | 15520-11-3 |
| Klebharz auf Terpen-Phenolbasis (Erweichungspunkt 105 °C, Hydroxylwert 30-60) | Dertophene® T105 | DRT, Frankreich | 73597-48-5 |
| Pentaerythrittetraglycidether | Polypox® R16 | UPPC AG | 3126-63-4 |
| 3,4-Epoxycyclohexylmethyl-3,4-epoxycyclohexancarboxylat | Uvacure® 1500 | Cytec Industries Inc. | 2386-87-0 |
| Dimethylpropanphosphonat | Levagard® DMPP | Lanxess | 18755-43-6 |
| Bis-(2-dimethylaminoethyl)ether | Jeffcat® ZF-20 | Huntsman | 3033-62-3 |
| *trans*-2-Aminocyclohexanol | | Sigma-Aldrich | 5456-63-3 |

(fortgesetzt)

| Chemische Verbindung | Handelsname | Hersteller | CAS-Nr. |
|---|---|---|---|
| *N,N,N'*-Trimethyl-N'-hydroxyethyl bisaminoethylether | Jeffcat® ZF-10 | Huntsman | 83016-70-0 |
| Isophorondiamin | | Sigma-Aldrich | 2855-13-2 |
| *N,N,N,N,N*-Pentamethyldiethylentriamin | Jeffcat® ZR-40 | Huntsman | 3030-47-5 |
| *N'*-(3-(Dimethylamino)propyl)-*N,N*-dimethyl-1,3-propandiamin | Jeffcat® Z-130 | Huntsman | 6711-48-4 |
| Diethylentriamin | Epikure® 3223 | Hexion Spec. Chemicals | 111-40-0 |
| *N,N,N,N*-tetramethylmethanediamine | | Sigma-Aldrich | 51-80-9 |
| Thermoplastische Mikrohohlkugeln (Partikelgröße 10 - 17 $\mu$m; Dichte max. 0,017 g/cm$^3$; Expansionstemperatur 127 - 139 °C [Start]; 164 - 184 °C [max. Exp.]) | Expancel® 092 DU 40 | Akzo Nobel | |
| alle Spezifikationsangaben bei 20 °C; Epikure® auch vertrieben unter den Handelsbezeichnungen Epi-Cure® und Bakelite® EPH | | | |

Beispiele Haftkleber

Herstellung der Ausgangspolymere für die Beispiele B1 bis B9

Im Folgenden wird die Präparation der Ausgangspolymere beschrieben. Die untersuchten Polymere werden konventionell über eine freie radikalische Polymerisation in Lösung hergestellt.

Basispolymer P1

Ein für radikalische Polymerisationen konventioneller Reaktor wurde mit 30 kg 2-Ethyl-hexylacrylat, 67 kg n-Butylacrylat, 3 kg Acrylsäure, 0,5 kg und 66 kg Aceton/Isopropanol (96:4) befüllt. Nach 45minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 50 g 2,2'-Azobis(2-methylbutyronitril) zugegeben und nach 4 h wurde mit 20 kg Aceton/Isopropanol-Gemisch (96:4) verdünnt.
Nach 5 sowie nach 7 h wurde jeweils mit 150 g Bis-(4-*tert*-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,6 %, einen K-Wert von 79,6, ein mittleres Molekulargewicht von $M_w$ = 1.557.000 g/mol, Polydispersität PD ($M_w/M_n$) = 12,6.

Basispolymer P2

Ein für radikalische Polymerisationen konventioneller Reaktor wurde mit 47,5 kg 2-Ethylhexylacrylat, 47,5 kg n-Butylacrylat, 5 kg Acrylsäure, 150 g Dibenzoyltrithiocarbonat und 66 kg Aceton befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben. Nach 4 h verdünnte man mit 10 kg Aceton. Nach 5 und nach 7 h erfolgte eine Zugabe von jeweils 150 g Bis-(4-*tert*-butylcyclohexyl)peroxydicarbonat. Nach 22 h Reaktionszeit wurde die Polymerisation abgebrochen und auf Raumtemperatur abgekühlt.
Das Polyacrylat hat einen Umsatz von 99,5 %, einen K-Wert von 41,9 und ein mittleres Molekulargewicht von $M_w$ = 367.000 g/mol, Polydispersität PD ($M_w/M_n$) = 2,8.

Basispolymer P3

Analog Beispiel P1 wurden 30 kg 2-Ethylhexylacrylat, 67 kg n-Butylacrylat und 3 kg Acrylsäure in 66 kg Aceton/Isopropanol (96:4) polymerisiert. Initiiert wurde zweimal mit jeweils 50 g 2,2'-Azobis(2-methylbutyronitril), zweimal mit jeweils 150 g Bis-(4-*tert*-butylcyclohexyl)peroxydicarbonat und verdünnt mit 23 kg Aceton/Isopropanol-Gemisch (96:4). Nach 22 h Reaktionszeit wurde die Polymerisation abgebrochen und auf Raumtemperatur abgekühlt.

Das Polyacrylat hat einen Umsatz von 99,6 %, einen K-Wert von 75,1 und ein mittleres Molekulargewicht von $M_w$ = 1.480.000 g/mol, Polydispersität PD ($M_w/M_n$) = 16,1.

Basispolymer P4 (viskoelstischer Träger)

Analog Beispiel P1 wurden 68 kg 2-Ethylhexylacrylat, 25 kg Methylacrylat und 7 kg Acrylsäure in 66 kg Aceton/Isopropanol (94:6) polymerisiert. Initiiert wurde zweimal mit jeweils 50 g 2,2'-Azobis(2-methylbutyronitril), zweimal mit jeweils 150 g Bis-(4-*tert*-butylcyclohexyl)peroxydicarbonat und verdünnt mit 20 kg Aceton/Isopropanol-Gemisch (94:6). Nach 22 h Reaktionszeit wurde die Polymerisation abgebrochen und auf Raumtemperatur abgekühlt.

Das Polyacrylat hat einen Umsatz von 99,7 %, einen K-Wert von 51,3 und ein mittleres Molekulargewicht von $M_w$ = 676.000 g/mol, Polydispersität PD ($M_w/M_n$) = 9,5.

Verfahren 1: Aufkonzentration / Herstellung der Schmelzhaftkleber:

Die Acrylatcopolymere (Basispolymere P1 bis P4) werden mittels Einschneckenextruder (Aufkonzentrationsextruder, Berstorff GmbH, Deutschland) weitestgehend vom Lösemittel befreit (Restlösemittelgehalt ≤ 0,3 Gew.-%; vgl. bei den einzelnen Beispielen). Exemplarisch sind hier die Parameter der Aufkonzentration des Basispolymeren P1 dargestellt. Die Drehzahl der Schnecke betrug 150 U/min, der Motorstrom 15 A, es wurde ein Durchsatz von 58,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

Verfahren 2: Herstellung der modifizierten Schmelzhaftkleber und viskoelastischen Träger:

Die nach dem oben erläuterten Verfahren 1 hergestellten Acrylatschmelzhaftkleber wurden direkt in einen nachgeschalteten WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurde das Harz Dertophene® T105 in Zone 1 zudosiert und homogen eingemischt. Bei der Masse für die Beispiele MT 1 wurden über das Feststoffdosiersystem kein Harz, sondern die thermoplastischen Mikrohohlkugeln, welche zuvor mit Levagard® DMPP zu einer Paste gemischt wurden, zudosiert. Exemplarisch sind hier für die Harzcompoundierung mit dem Basispolymer P1 die Parameter dargelegt. Die Drehzahl betrug 451 U/min, der Motorstrom 42 A, es wurde ein Durchsatz von 30,1 kg/h realisiert. Die Temperaturen der Zonen 1 und 2 betrugen jeweils 105 °C, die Schmelzetemperatur in Zone 1 betrug 117 °C und die Massetemperatur bei Austritt (Zone 3) bei 100 °C.

Verfahren 3: Herstellung der erfindungsgemäßen Klebebänder, Abmischung mit dem Vernetzer-Beschleuniger-System für die thermische Vernetzung und Beschichtung:

Die nach den Verfahren 1 - 2 hergestellten Acrylatschmelzhaftkleber wurden in einem Fütterextruder (Einschneckenförderextruder der Firma TROESTER GmbH & Co KG, Deutschland) aufgeschmolzen und mit diesem als Polymerschmelze in einen Doppelschneckenextruder gefördert (Fa. LEISTRITZ, Deutschland, Bez. LSM 30/34. Das Aggregat wird von außen elektrisch beheizt und über verschiedene Gebläse luftgekühlt und ist so konzipiert, dass bei guter Verteilung des Vernetzer-Beschleuniger-Systems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzer und Beschleuniger erfolgt mit geeignetem Dosierequipment gegebenenfalls an mehreren Stellen (Fig.1: Dosierstellen 1.1 und 1.2) und gegebenenfalls unter Verwendung von Dosierhilfsmitteln in die druckfreien Förderzonen des Doppelschneckenextruders. Nach Austritt der fertig compoundierten, d.h. mit dem Vernetzer-Beschleuniger-System abgemischten Klebmasse aus dem Doppelschneckenextruder (Austritt: Runddüse, 5 mm Durchmesser), erfolgt die Beschichtung nach Fig.1 auf ein bahnförmiges Trägermaterial. Die Zeit zwischen Zudosierung des Vernetzer-Beschleuniger-Systems bis zum Ausformen bzw. Beschichten wird als Verarbeitungszeit bezeichnet. Die Verarbeitungszeit gibt den Zeitraum an, in welcher die mit dem Vernetzer-Beschleuniger-System abgemischte Klebmasse bzw. die viskoelastische Trägerschicht mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze des 2-Walzenauftragswerks wird nicht angetrieben.

In den nachfolgenden Beispielen und in den Tabellen 1 sowie Tabelle 3 bis Tabelle 4 werden die eingesetzten Formulierungen, die Herstellparameter und die erzielten Eigenschaften jeweils näher beschrieben.

Beispiele B1 bis B4

Die Basispolymere P1 bis P4 wurden gemäß dem beschriebenen Polymersationsverfahren polymerisiert, gemäß Verfahren 1 aufkonzentriert (Feststoffgehalt 99,8 %) und anschließend gemäß Verfahren 2 mit dem Harz Dertophene® T105 abgemischt. Diese harzmodifizierten Acrylat-Hotmeltmassen wurden dann gemäß Verfahren 3 kontinuierlich mit dem Vernetzer-Beschleuniger-System bestehend aus einem

- Pentaerthrittetraglycidether,
  hier Polypox® R16 der Fa. UPPC AG (Epoxid)
  und einem

- Bis-(2-dimethylaminoethyl)ether,
  hier Jeffcat® ZF-20 der Fa. HUNTSMAN (Aminbeschleuniger)

compoundiert.

Detaillierte Beschreibung: In dem in Verfahren 3 beschriebenen Doppelschneckenextruder wurde ein Gesamtmassestrom bestehend aus 70 Teilen eines der Polymere P1 bis P4 und jeweils 30 Teilen Harz Dertophene® T105 von 533,3 g/min (das entspricht 373 Gramm des reinen Polymers pro Minute) mit 0,70 g/min des Epoxidvernetzers Pentaerythrittetraglycidether (entspricht 0,19 Gew.-% auf Polymer) und 3,71 g/min des Aminbeschleunigers Bis-(2-dimethylaminoethyl)ether (entspricht 1,0 Gew.% auf Polymer) abgemischt. Die Dosierung des Epoxids erfolgt über eine Schlauchpumpe an Dosierstelle 1.1 und die des Amins separat über eine Schlauchpumpe an Dosierstelle 1.2 (sieh Fig.1). Zur Verbesserung der Dosierfähigkeit und der erreichbaren Mischgüte wurde das verwendete Vernetzersystem mit dem flüssigen Dimethylpropylphosphonat Levagard® DMPP der Fa. Lanxess verdünnt (Verhältnis zum Vernetzer 0,5:1). Die Prozessparameter sind in Tabelle 3 zusammengefasst.

Die Verarbeitungszeit der fertigen Compounds war größer 7 min bei einer durchschnittlichen Massetemperatur von 125 °C nach dem Verlassen des LEISTRITZ-Doppelschneckenextruders. Die Beschichtung erfolgte an einem 2-Walzenauftragswerk gemäß Fig. 1 bei Walzenoberflächentemperaturen von jeweils 100 °C und einem Masseauftrag von jeweils 100 g/m$^2$ auf 23 μm PET-Folie. Von den so hergestellten Klebebändern wurden die Klebkraft auf Stahl bei Raumtemperatur und Mikroschwerwege bei 40 °C in Abhängigkeit der Lagerungsdauer gemessen. Nach 14 Tagen Raumtemperaturlagerung verändert sich der maximale Mikroscherweg nur noch unwesentlich. Die klebtechnischen Daten der Beispiele B1 bis B4 sind in Tabelle 4 zusammengefasst. Mit diesen Beispielen wird gezeigt, dass sehr leistungsfähige Klebebänder hergestellt werden können, die sich unter anderem durch gute Klebkräfte auf polaren und unpolaren Substraten (Stahl und Polyethlyen) und gute kohäsive Eigenschaften auch unter Temperatureinfluss auszeichnen.

Tabelle 1: Massespezifische Angaben

| Beispiel | Basis-polymer | K-Wert | Compoundieren gemäß Verfahren 2 | | Einsatzstoffe und -mengen | |
|---|---|---|---|---|---|---|
| | | | Polymer und Zuschlagstoffe | | Vernetzer | |
| | | [ ] | | | Beschleuniger | Gew-% auf Polymer |
| B1 | P1 | 79,6 | 70 Teile Polymer P1 + | | Polypox® R16 | 0,19 |
| | | | 30 Teile Harz DT 105 | | Jeffcat® ZF-20 | 1,0 |
| B2 | P2 | 41,9 | 70 Teile Polymer P2 + | | Polypox® R20 | 0,19 |
| | | | 30 Teile Harz DT 105 | | Jeffcat® ZF-20 | 1,0 |
| B3 | P3 | 75,1 | 70 Teile Polymer P3 + | | Polypox® R16 | 0,19 |
| | | | 30 Teile Harz DT 105 | | Jeffcat® ZF-20 | 1,0 |
| B4 | P4 | 51,3 | 70 Teile Polymer P4 + | | Polypox® R16 | 0,19 |
| | | | 30 Teile Harz DT 105 | | Jeffcat® ZF-20 | 1,0 |
| K-Wert = Messmethode A1 DT 105 = Dertophene® T105 | | | | | | |

Vergleich der Raumtemperaturkinetik verschiedener Beschleuniger (Beispiele B5 bis B9)

Die folgenden Beispiele wurden jeweils mit dem Polymer P3, dem Epoxidvernetzer Pentaerythrittetraglycidether (Polypox® R 16 Fa. UPPC, 0,19 Gew.-% bezogen aufs Polymer) und dem Harz Dertophene® T105 (Fa. DRT, 32 Gew.-% bezogen aufs Polymer) durchgeführt. Die Menge an Beschleuniger wurde so gewählt, dass die Anzahl an aktivierenden basischen Gruppen konstant ist (siehe Tabelle 2). Aufgrund unterschiedlicher Anzahl an Funktionalitäten pro Molekül variiert die Stoffmengenkonzentration bezogen auf das Polyacrylat somit.

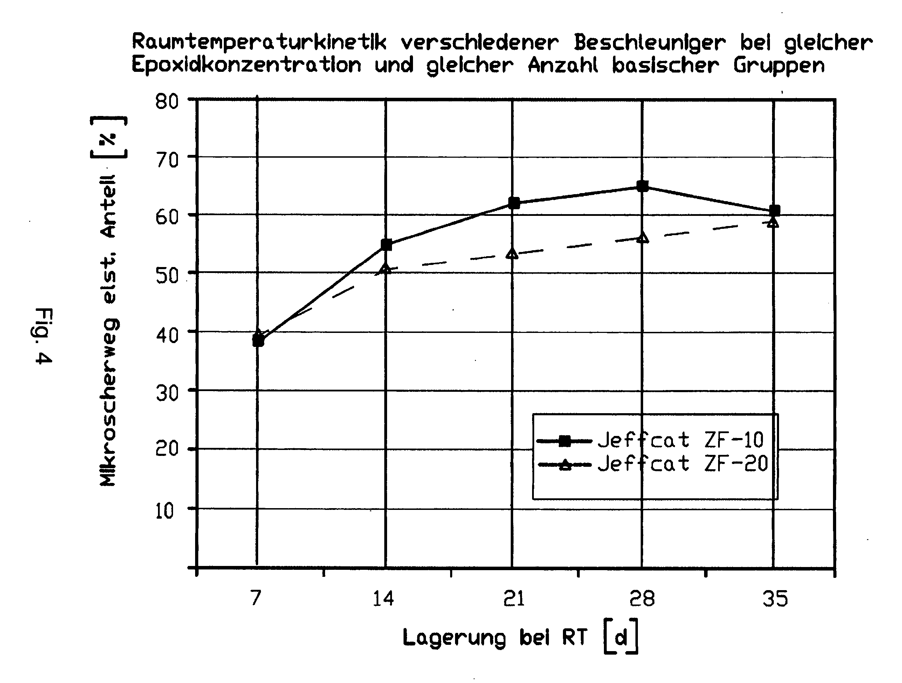

Der Masseauftrag beträgt jeweils 50 g/m$^2$ auf 23 $\mu$m PET-Folie. Von den so hergestellten Klebebändern wurden die Klebkraft auf Stahl bei Raumtemperatur und Mikroschwerwege bei 40 °C in Abhängigkeit von der Lagerungsdauer gemessen (ausgewählte Beispiele sind in Fig. 4 dargestellt). Die klebtechnischen Daten der Beispiele B5 bis B9 sind in Tabelle 4 zusammengefasst. Da der Prozess analog dem Beispiel B3 durchgeführt wurde, sind die Prozessparameter nicht mehr explizit aufgeführt.

Tabelle 2: Beschleunigerkonzentrationen

| Beispiel | Beschleuniger | Konzentration [%] | Amingruppen/100 g Polymer [mol] |
|---|---|---|---|
| B5 | Bis-(2-dimethylaminoethyl)ether | 0,93 | 1,2 |
| B6 | trans-2-Aminocyclohexanol | 1,82 | 1,2 |
| B7 | N,N,N'-Trimethyl-N'-hydroxyethylbisaminoethylether | 1,03 | 1,2 |
| Vergleichsbeispiel B8 | Diethylentriamin | 0,41 | 1,2 |
| Vergleichsbeispiel B9 | N,N,N,N-Tetramethylmethandiamin | 0,61 | 1,2 |

Bei Verwendung des erfindungsgemäßen Vernetzer-Beschleuniger-Systems läuft die Vernetzungsreaktion über die funktionellen Gruppen des Polyacrylates auch ohne Wärmezufuhr bei Normalbedingungen (Raumtemperatur) vollständig ab. In der Regel ist nach einer Lagerzeit von 7 Tagen bis 14 Tagen die Vernetzungsreaktion so weit abgeschlossen, dass ein funktionsfähiges Klebeband bzw. eine funktionsfähige Trägerschicht vorliegt. Der Endvernetzungszustand und damit die endgültige Kohäsion der Masse wird je nach Wahl des Masse-Vernetzer-Systems nach einer Lagerung von 14 bis 30 Tagen, in vorteilhafter Form nach 14 bis 21 Tagen Lagerungszeit bei Raumtemperatur erreicht, bei höherer Lagertemperatur erwartungsgemäß früher.

Durch die Vernetzung erhöhen sich die Kohäsion der Klebemasse und damit auch die Scherfestigkeit. Die erhaltenen Verknüpfungsgruppen Gruppen sind sehr stabil. Dies ermöglicht sehr alterungsstabile und wärmebeständige Selbstklebebänder. Weiterhin kann gezeigt werden, dass die Wahl des Beschleunigers die klebtechnischen Eigenschaften so gut wie nicht, die Raumtemperaturkinetik jedoch sehr stark beeinflusst (siehe Figur 4 sowie Tabelle 4). Bei Betrachtung der Vergleichsbeispiele B8 und B9 zeigt sich, dass die Vernetzung innerhalb des oben erwähnten Zeitraumes noch nicht abgeschlossen ist bzw. dass zuvor eine Vergelung im Prozess auftritt, sofern nicht das erfindungsgemäße Vernetzer-Beschleuniger-System eingesetzt wird.

Tabelle 3: Prozessparameter

| Beispiel | Basispolymer | | Compoundierung gemäß Verfahren 2 | Prozessparameter | | | | | | | |
|---|---|---|---|---|---|---|---|---|---|---|---|
| | Polymer | K-Wert | Anteil Zuschlagstoffe | Durchsatz Gesamtmasse DSE [kg/h] | Drehzahl DSE [1/min] | Sollstromaufnahme DSE [A] | Druck Ausgang DSE [bar] | Massetemp. nach DSE [°C] | Rakelwalze RW | Beschichtungswalze BW | Verarbeitungszeit [min] |
| [ ] | [ ] | [ ] | | | | | | | | | |
| B1 | P1 | 79,6 | 70 Teile Polymer P1 + 30 Teile Harz DT 105 | 32,0 | 110 | 15 | 12 | 125 | 100 | 100 | größer 7 |
| B2 | P2 | 41,9 | 70 Teile Polymer P2 + 30 Teile Harz DT 105 | 32,4 | 110 | 7 | 5 | 108 | 100 | 100 | größer 7 |
| B3 | P3 | 75,1 | 70 Teile Polymer P3 + 30 Teile Harz DT 105 | 32,0 | 110 | 15 | 12 | 125 | 100 | 100 | größer 7 |
| B4 | P4 | 51,3 | 70 Teile Polymer P4 + 30 Teile Harz DT 105 | 33,0 | 110 | 11 | 13 | 117 | 100 | 100 | größer 7 |

DSE = Doppelschneckenextruder; DT 105 = Dertophene® T1 05

Tabelle 4: Klebtechnische Ergebnisse

| Beispiel | Basispolymer | | Compoundierverfahren 2 | | Klebtechnische Eigenschaften nach einer Lagerung der Muster von 25 Tagen bei Raumtemperatur | | | | | |
|---|---|---|---|---|---|---|---|---|---|---|
| | Polymer | K-Wert | Anteil Zuschlagstoffe | Trägerfolie | Masseauftrag | Klebkraft Stahl | Klebkraft PE | Scherstandzeit 10N,23°C | Scherstandzeit 10N, 70°C | MSW 40°C / elast. Anteil |
| [ ] | [ ] | [ ] | | [ ] | [g/m$^2$] | [N/cm] | [N/cm] | [min] | [min] | [$\mu$m] / [%] |
| B1 | P1 | 79,6 | 70 Teile Polymer P1 + 30 Teile Harz DT 105 | 23 $\mu$m PET-Folie | 100 | 9,8 | 4,2 | > 10.000 | 80 | 160 / 75 |
| B2 | P2 | 41,9 | 70 Teile Polymer P2 + 30 Teile Harz DT 105 | 23 $\mu$m PET-Folie | 100 | 11,5 | 5,5 | 1.600 | 30 | 370 / 68 |
| B3 | P3 | 75,1 | 70 Teile Polymer P3 + 30 Teile Harz DT 105 | 23 $\mu$m PET-Folie | 100 | 10,8 | 4,8 | > 10.000 | 680 | 120 / 67 |
| B4 | P4 | 51,3 | 70 Teile Polymer P4 + 30 Teile Harz DT 105 | 23 $\mu$m PET-Folie | 100 | 7,4 | 2,9 | > 10.000 | 580 | 230 / 73 |
| B5 | P3 | 75,1 | 68 Teile Polymer P3 + 32 Teile Harz DT 105 | 23 $\mu$m PET-Folie | 50 | 8,7 | 5,0 | 1.124 | 120 | 828 / 58 |
| B6 | P3 | 75,1 | 68 Teile Polymer P3 + 32 Teile Harz DT 105 | 23 $\mu$m PET-Folie | 50 | 8,6 | 4,9 | 1.526 | 136 | 344 / 66 |
| 87 | P3 | 75,1 | 68 Teile Polymer P3 + 32 Teile Harz DT 105 | 23 $\mu$m PET-Folie | 50 | 8,4 | 4,2 | 1.794 | 125 | 533 / 61 |
| B8 (Vgl.) | P3 | 75,1 | 68 Teile Polymer P3 + 32 Teile Harz DT 105 | 23 $\mu$m PET-Folie | 50 | Prüfungen nicht möglich, Formulierung ist vergelt | | | | - |
| B9 (Vgl.) | P3 | 75,1 | 68 Teile Polymer P3 + 32 Teile Harz DT 105 | 23 $\mu$m PET-Folie | 50 | Prüfungen nicht möglich, Formulierung ist nicht vernetzt | | | | größer 2000 / 0 |

Klebkraft Stahl / PE = Messmethode H1          DT 105 = Dertophene® T105 Scherstandzeit = Messmethode H2          Für die Art des Beschleunigers der Beispiele B5 bis B9 siehe Tabelle 2 MSW = Mikroscherweg = Messmethode H3

**Patentansprüche**

1. Vernetzer-Beschleuniger-System für die thermische Vernetzung von Polyacrylaten mit funktionellen Gruppen, die geeignet sind, mit Epoxidgruppen Verknüpfungsreaktionen einzugehen, umfassend zumindest eine Substanz enthaltend mindestens eine Epoxidgruppe (Vernetzer) und zumindest eine Substanz entsprechend der allgemeinen Formel (I)

$$R^1_2N\text{-}CR^2R^3\text{-}CR^4R^5\text{-}(CR^6R^7)_n\text{-}X \qquad (I)$$

worin
die Reste $R^1$ unabhängig voneinander für ein Wasserstoffatom oder einen substituierten oder unsubstituierten Alkyl- oder Cycloalkylrest mit 1 bis 8 Kohlenstoffatomen stehen oder
mit dem Stickstoffatom einen 5-7gliedrigen Ring bilden, der mindestens 4 Kohlenstoffatome und maximal ein weiteres Heteroatom als Ringatome enthält;
die Reste $R^2$, $R^3$, $R^4$, $R^5$, $R^6$ und $R^7$ unabhängig voneinander für ein Wasserstoffatom oder einen Alkylrest mit 1 bis 8 Kohlenstoffatomen stehen oder eine 5-7gliedrige Cycloalkylengruppe bilden;
n für eine ganze Zahl von 0 bis 4 steht; und
X für eine Gruppe ausgewählt aus -OH, -OR, -SH, -SR und $-PR_2$ steht, worin die Reste R unabhängig voneinander für einen jeweils linearen oder verzweigten, unsubstituierten oder substituierten $C_1$-$C_{18}$-Alkylrest, $C_2$-$C_{18}$-Alkenylrest, $C_2$-$C_{18}$-Alkinylrest; eine unsubstituierte oder substituierte Arylgruppe oder einen aliphatischen oder aromatischen Heterocyclus stehen (Beschleuniger).

2. Vernetzer-Beschleuniger-System gemäß Anspruch 1, **dadurch gekennzeichnet, dass** X für eine Gruppe ausgewählt aus -OH, -OR und $-PR_2$ steht.

3. Vernetzer-Beschleuniger-System gemäß mindestens einem der vorstehenden Ansprüche, **dadurch gekennzeichnet, dass** X für eine Gruppe ausgewählt aus - OH und -OR steht.

4. Vernetzer-Beschleuniger-System gemäß Anspruch 3, **dadurch gekennzeichnet, dass** R für einen gegebenenfalls substituierten Alkylaminoalkylrest steht.

5. Vernetzer-Beschleuniger-System gemäß mindestens einem der vorstehenden Ansprüche, **dadurch gekennzeichnet, dass** n gleich 0 (Null) ist.

6. Vernetzer-Beschleuniger-System gemäß mindestens einem der vorstehenden Ansprüche, **dadurch gekennzeichnet, dass** mindestens einer der Reste $R^1$ für einen substituierten oder unsubstituierten Alkyl- oder Cycloalkylrest mit 1 bis 8 Kohlenstoffatomen steht.

7. Vernetzer-Beschleuniger-System gemäß mindestens einem der vorstehenden Ansprüche, **dadurch gekennzeichnet, dass** beide Reste $R^1$ unabhängig voneinander für einen substituierten oder unsubstituierten Alkyl- oder Cycloalkylrest mit 1 bis 8 Kohlenstoffatomen stehen.

8. Vernetzer-Beschleuniger-System gemäß mindestens einem der vorstehenden Ansprüche, **dadurch gekennzeichnet, dass** die beiden Reste $R^1$ jeweils für eine Methylgruppe stehen.

9. Vernetzer-Beschleuniger-System gemäß mindestens einem der vorstehenden Ansprüche, **dadurch gekennzeichnet, dass** das Verhältnis der Anzahl aller substituierten und unsubstituierten Amino- und Phosphinogruppen im Beschleuniger zur Anzahl der Epoxidgruppen im Vernetzer von 0,2 : 1 bis 4 : 1 beträgt.

10. Thermisch vernetzbare Zusammensetzung, umfassend
mindestens ein Polyacrylat mit funktionellen Gruppen, die geeignet sind, mit Epoxidgruppen Verknüpfungsreaktionen einzugehen, und
ein Vernetzer-Beschleuniger-System gemäß mindestens einem der vorstehenden Ansprüche.

11. Thermisch vernetzbare Zusammensetzung gemäß Anspruch 10, **dadurch gekennzeichnet, dass** das Verhältnis der Gesamtzahl der Epoxidgruppen im Vernetzer zur Anzahl der funktionellen Gruppen im Polyacrylat, die geeignet sind, mit Epoxidgruppen Verknüpfungsreaktionen einzugehen, im Bereich von 0,01 : 1 bis 1 : 1 liegt.

**12.** Thermisch vernetzbare Zusammensetzung gemäß mindestens einem der Ansprüche 10 und 11, **dadurch gekennzeichnet, dass** der Gesamtanteil an Vernetzer 0,1 - 5 Gew-% beträgt und dass der Gesamtanteil an Beschleuniger 0,05 - 5 Gew-% beträgt, jeweils bezogen auf das reine zu vernetzende Polyacrylat

**13.** Vernetztes Polyacrylat, erhältlich durch thermische Vernetzung einer Zusammensetzung gemäß mindestens einem der Ansprüche 10 bis 12.

**14.** Verfahren zur thermischen Vernetzung von Polyacrylaten mit funktionellen Gruppen, die geeignet sind, mit Epoxidgruppen Verknüpfungsreaktionen einzugehen, umfassend den Einsatz eines Vernetzer-Beschleuniger-Systems gemäß mindestens einem der Ansprüche 1 bis 9.

**15.** Verwendung eines Vernetzer-Beschleuniger-Systems gemäß mindestens einem der Ansprüche 1 bis 9 zur Herstellung thermisch vernetzter Polyacrylate.

**16.** Verwendung eines vernetzten Polyacrylats gemäß Anspruch 13 als Haftklebemasse.

**Claims**

**1.** Crosslinker-accelerator system for the thermal crosslinking of polyacrylates having functional groups suitable for entering into linking reactions with epoxide groups, comprising
at least one substance comprising at least one epoxide group (crosslinker) and
at least one substance conforming to the general formula (I)

$$R^1_2N\text{-}CR^2R^3\text{-}CR^4R^5\text{-} (CR^6R^7)_n\text{-}X \qquad (I)$$

in which
the radicals $R^1$ independently of one another are a hydrogen atom or a substituted or unsubstituted alkyl or cycloalkyl radical having 1 to 8 carbon atoms or
with the nitrogen atom form a 5-7-membered ring which comprises at least 4 carbon atoms and not more than one further heteroatom as ring atoms; the radicals $R^2$, $R^3$, $R^4$, $R^5$, $R^6$ and $R^7$ independently of one another are a hydrogen atom or an alkyl radical having 1 to 8 carbon atoms or form a 5-7-membered cycloalkylene group;
$n$ is an integer from 0 to 4; and
X is a group selected from -OH, -OR, -SH, -SR and $-PR_2$, in which the radicals R independently of one another are a $C_1$-$C_{18}$ alkyl radical, $C_2$-$C_{18}$ alkenyl radical or $C_2$-$C_{18}$ alkynyl radical which is in each case linear or branched and unsubstituted or substituted, or an unsubstituted or substituted aryl group or an aliphatic or aromatic heterocycle (accelerator).

**2.** Crosslinker-accelerator system according to Claim 1, **characterized in that** X is a group selected from -OH, -OR and $-PR_2$.

**3.** Crosslinker-accelerator system according to at least one of the preceding claims, **characterized in that** X is a group selected from -OH and -OR.

**4.** Crosslinker-accelerator system according to Claim 3, **characterized in that** R is an optionally substituted alkylaminoalkyl radical.

**5.** Crosslinker-accelerator system according to at least one of the preceding claims, **characterized in that** n is 0 (zero).

**6.** Crosslinker-accelerator system according to at least one of the preceding claims, **characterized in that** at least one of the radicals $R^1$ is a substituted or unsubstituted alkyl or cycloalkyl radical having 1 to 8 carbon atoms.

**7.** Crosslinker-accelerator system according to at least one of the preceding claims, **characterized in that** both radicals $R^1$ independently of one another are a substituted or unsubstituted alkyl or cycloalkyl radical having 1 to 8 carbon atoms.

**8.** Crosslinker-accelerator system according to at least one of the preceding claims, **characterized in that** the two radicals $R^1$ are each a methyl group.

9. Crosslinker-accelerator system according to at least one of the preceding claims, **characterized in that** the ratio of the number of all the substituted and unsubstituted amino and phosphine groups in the accelerator to the number of epoxide groups in the crosslinker is from 0.2:1 to 4:1.

10. Thermally crosslinkable composition comprising
at least one polyacrylate having functional groups suitable for entering into linking reactions with epoxide groups, and
a crosslinker-accelerator system according to at least one of the preceding claims.

11. Thermally crosslinkable composition according to Claim 10, **characterized in that** the ratio of the total number of epoxide groups in the crosslinker to the number of functional groups in the polyacrylate that are suitable for entering into linking reactions with epoxide groups is in the range from 0.01:1 to 1:1.

12. Thermally crosslinkable composition according to at least one of Claims 10 and 11, **characterized in that** the total fraction of crosslinker is 0.1%-5% by weight and **in that** the total fraction of accelerator is 0.05%-5% by weight, based in each case on the pure polyacrylate to be crosslinked.

13. Crosslinked polyacrylate obtainable by thermal crosslinking of a composition according to at least one of Claims 10 to 12.

14. Method for the thermal crosslinking of polyacrylates having functional groups suitable for entering into linking reactions with epoxide groups, comprising the use of a crosslinker-accelerator system according to at least one of Claims 1 to 9.

15. Use of a crosslinker-accelerator system according to at least one of Claims 1 to 9 for producing thermally crosslinked polyacrylates.

16. Use of a crosslinked polyacrylate according to Claim 13 as a pressure-sensitive adhesive.

**Revendications**

1. Système agent de réticulation-accélérateur pour la réticulation thermique de polyacrylates contenant des groupes fonctionnels qui sont appropriés pour réaliser des réactions de liaison avec des groupes époxyde, comprenant au moins :

une substance contenant au moins un groupe époxyde (agent de réticulation) et
au moins une substance correspondant à la formule générale (I)

$$R^1{}_2N\text{-}CR^2R^3\text{-}CR^4R^5\text{-}(CR^6R^7)_n\text{-}X \qquad (I)$$

dans laquelle
les radicaux $R^1$ représentent indépendamment les uns des autres un atome d'hydrogène ou un radical alkyle ou cycloalkyle substitué ou non substitué contenant 1 à 8 atomes de carbone, ou
forment avec l'atome d'azote un cycle de 5 à 7 éléments, qui contient au moins 4 atomes de carbone et au plus un hétéroatome supplémentaire en tant qu'atomes de cycle ;
les radicaux $R^2$, $R^3$, $R^4$, $R^5$, $R^6$ et $R^7$ représentent indépendamment les uns des autres un atome d'hydrogène ou un radical alkyle de 1 à 8 atomes de carbone, ou forment un groupe cycloalkylène de 5 à 7 éléments ;
n représente un nombre entier de 0 à 4 ; et
X représente un groupe choisi parmi -OH, -OR, -SH, -SR et $-PR_2$, les radicaux R représentant indépendamment les uns des autres un radical alkyle en $C_1$-$C_{18}$, un radical alcényle en $C_2$-$C_{18}$, un radical alcynyle en $C_2$-$C_{18}$, chacun linéaire ou ramifié, non substitué ou substitué ; un groupe aryle non substitué ou substitué, ou un hétérocycle aliphatique ou aromatique (accélérateur).

2. Système agent de réticulation-accélérateur selon la revendication 1, **caractérisé en ce que** X représente un groupe choisi parmi -OH, -OR et $-PR_2$.

3. Système agent de réticulation-accélérateur selon au moins l'une quelconque des revendications précédentes, **caractérisé en ce que** X représente un groupe choisi parmi -OH et -OR.

**4.** Système agent de réticulation-accélérateur selon la revendication 3, **caractérisé en ce que** R représente un radical alkylaminoalkyle éventuellement substitué.

**5.** Système agent de réticulation-accélérateur selon au moins l'une quelconque des revendications précédentes, **caractérisé en ce que** n représente 0 (zéro).

**6.** Système agent de réticulation-accélérateur selon au moins l'une quelconque des revendications précédentes, **caractérisé en ce qu'**au moins un des radicaux $R^1$ représente un radical alkyle ou cycloalkyle substitué ou non substitué contenant 1 à 8 atomes de carbone.

**7.** Système agent de réticulation-accélérateur selon au moins l'une quelconque des revendications précédentes, **caractérisé en ce que** les deux radicaux $R^1$ représentent indépendamment l'un de l'autre un radical alkyle ou cycloalkyle substitué ou non substitué contenant 1 à 8 atomes de carbone.

**8.** Système agent de réticulation-accélérateur selon au moins l'une quelconque des revendications précédentes, **caractérisé en ce que** les deux radicaux $R^1$ représentent chacun un groupe méthyle.

**9.** Système agent de réticulation-accélérateur selon au moins l'une quelconque des revendications précédentes, **caractérisé en ce que** le rapport entre le nombre de tous les groupes amino et phosphino substitués et non substitués dans l'accélérateur et le nombre de groupes époxyde dans l'agent de réticulation est de 0,2:1 à 4:1.

**10.** Composition réticulable thermiquement, comprenant :

au moins un polyacrylate contenant des groupes fonctionnels qui sont appropriés pour réaliser des réactions de liaison avec des groupes époxyde et
un système agent de réticulation-accélérateur selon au moins l'une quelconque des revendications précédentes.

**11.** Composition réticulable thermiquement selon la revendication 10, **caractérisée en ce que** le rapport entre le nombre total de groupes époxyde dans l'agent de réticulation et le nombre de groupes fonctionnels dans le polyacrylate qui sont appropriés pour réaliser des réactions de liaison avec des groupes époxyde se situe dans la plage allant de 0,01:1 à 1:1.

**12.** Composition réticulable thermiquement selon au moins l'une quelconque des revendications 10 et 11, **caractérisée en ce que** la proportion totale d'agent de réticulation est de 0,1 à 5 % en poids et **en ce que** la proportion totale d'accélérateur est de 0,05 à 5 % en poids, à chaque fois par rapport au polyacrylate pur à réticuler.

**13.** Polyacrylate réticulé, pouvant être obtenu par réticulation thermique d'une composition selon au moins l'une quelconque des revendications 10 à 12.

**14.** Procédé de réticulation thermique de polyacrylates contenant des groupes fonctionnels qui sont appropriés pour réaliser des réactions de liaison avec des groupes époxyde, comprenant l'utilisation d'un système agent de réticulation-accélérateur selon au moins l'une quelconque des revendications 1 à 9.

**15.** Utilisation d'un système agent de réticulation-accélérateur selon au moins l'une quelconque des revendications 1 à 9 pour la fabrication de polyacrylates réticulés thermiquement.

**16.** Utilisation d'un polyacrylate réticulé selon la revendication 13 en tant que matière adhésive sensible à la pression.

**Zeichnungen**

Fig. 1

Fig. 2

28

Fig. 3

Raumtemperaturkinetik verschiedener Beschleuniger bei gleicher
Epoxidkonzentration und gleicher Anzahl basischer Gruppen

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0752435 A1
- US 4524104 A
- DE 102004044086 A1
- EP 1978069 A1
- US 6765078 B2
- US 6720399 B2
- EP 1311555 B1
- US 5945491 A
- US 5854364 A
- US 5789487 A
- WO 2006027387 A1

**In der Beschreibung aufgeführte Nicht-Patentliteratur**

- **T.G. FOX.** *Bull. Am. Phys. Soc.,* 1956, vol. 1, 123
- *Polymer,* 1967, vol. 8, 381 ff